# EUROPEAN PATENT APPLICATION

(11) **EP 4 761 150 A1**
(43) Date of publication of application: **17.06.2026**
(21) Application number: 24858572.1
(22) Date of filing: 27.08.2024
(51) Int. Cl.: H04J 3/06

(54) **TIME SYNCHRONIZATION METHOD AND APPARATUS**

(30) Priority: 31.08.2023 CN 202311130004
(71) Applicant: HUAWEI TECHNOLOGIES CO., LTD., Shenzhen 518129 (CN)
(72) Inventor: LI, Xiangyu, Shenzhen, Guangdong 518129 (CN); LOU, Chong, Shenzhen, Guangdong 518129 (CN); FAN, Qiang, Shenzhen, Guangdong 518129 (CN); PENG, Wenjie, Shenzhen, Guangdong 518129 (CN)
(74) Representative: Körber, Martin Hans
(86) International application number: PCT/CN2024/114870
(87) International publication number: WO 2025/045036

(57) **Abstract**

This application provides a time synchronization method and an apparatus. In the method, a second communication device may indicate a synchronization accuracy configuration to a first communication device for time synchronization. In this way, as a time-receiving device, the second communication device may determine a more proper synchronization accuracy configuration meeting a synchronization accuracy requirement of the second communication device, and notify the first communication device of the synchronization accuracy configuration. According to the method, a time-providing device performs time synchronization by using the synchronization accuracy configuration meeting the synchronization accuracy requirement of the time-receiving device, to finally improve reliability of supporting TSN/TSC between the time-providing device and the time-receiving device.

## Description

### CROSS-REFERENCE TO RELATED APPLICATIONS

This application claims priority to Chinese Patent Application No. 202311130004.7, filed with the China National Intellectual Property Administration on August 31, 2023 and entitled "TIME SYNCHRONIZATION METHOD AND APPARATUS", which is incorporated herein by reference in its entirety.

### TECHNICAL FIELD

This application relates to the field of communication technologies, and in particular, to a time synchronization method and an apparatus.

### BACKGROUND

In a communication system, to support time sensitive networking (time sensitive networking, TSN) or time sensitive communication (time sensitive communication, TSC), time between devices that need to communicate and interact with each other is synchronized. Therefore, a time-providing device and a time-receiving device need to exist in the communication system. The time-providing device is responsible for sending reference time information to the time-receiving device to implement time synchronization between the devices in the system. The reference time information indicates a reference time specified by the time-providing device.

However, because the time-receiving device passively receives the reference time information specified by the time-providing device, in the foregoing conventional time synchronization solution, synchronization accuracy of the reference time specified by the time-providing device may not meet a requirement of the time-receiving device. Consequently, reliability of supporting the TSN/TSC by the time-receiving device is low.

### SUMMARY

This application provides a time synchronization method and an apparatus, so that a time-providing device can perform time synchronization by using a synchronization accuracy configuration meeting a synchronization accuracy requirement of a time-receiving device.

According to a first aspect, an embodiment of this application provides a time synchronization method, applied to a first communication device. The following uses an example in which the first communication device performs the method for description. The method includes:

The first communication device receives a first message from a second communication device, where the first message includes a first indication, and the first indication indicates a first synchronization accuracy configuration; and the first communication device sends a second message to the second communication device, where the second message includes first reference time information, the first reference time information is used by the second communication device to perform time synchronization with the first communication device, and the first reference time information is determined based on the first synchronization accuracy configuration.

In the method, the second communication device may indicate a synchronization accuracy configuration to the first communication device for time synchronization. In this way, as a time-receiving device, the second communication device may determine a more proper synchronization accuracy configuration meeting a synchronization accuracy requirement of the second communication device, to ensure a TSN/TSC feature of a system. In conclusion, according to the method, a time-providing device may perform time synchronization by using the synchronization accuracy configuration meeting the synchronization accuracy requirement of the time-receiving device, to finally improve reliability of supporting TSN/TSC between the time-providing device and the time-receiving device.

In a possible design, the first synchronization accuracy configuration includes at least one of the following: a first clock type and a first synchronization accuracy requirement. Based on this, the first indication is an index value of the first synchronization accuracy configuration; or the first indication includes a time information type information element, where the time information type information element indicates the first clock type; or the first indication includes an uncertainty information element, where the uncertainty information element indicates the first synchronization accuracy requirement.

In a possible design, the first reference time information includes location information of a first reference time corresponding to the first synchronization accuracy configuration, or an index value of the first reference time.

In a possible design, the first message is used to request the first communication device to perform time synchronization by using the first synchronization accuracy configuration. Based on this, the first communication device may further send a third message to the second communication device, where the third message is used to notify the second communication device that the first communication device allows time synchronization to be performed by using the first synchronization accuracy configuration.

In a possible design, the first communication device is a network device, and the second communication device is a terminal device; or the first communication device is a first terminal device, and the second communication device is a second terminal device.

According to this design, the method may be applied to a mobile communication scenario or a sidelink scenario.

According to a second aspect, an embodiment of this application provides a time synchronization method, applied to a second communication device. A communication system includes the second communication device and the first communication device in the first aspect. The following uses an example in which the second communication device performs the method for description. The method includes:

The second communication device sends a first message to the first communication device, where the first message includes a first indication, and the first indication indicates a first synchronization accuracy configuration; the second communication device receives a second message from the first communication device, where the second message includes first reference time information, and the first reference time information is determined based on the first synchronization accuracy configuration; and the second communication device performs time synchronization with the first communication device based on the first reference time information.

In a possible design, the second communication device may determine the first synchronization accuracy configuration based on first information, where the first information represents a running status of the second communication device and/or an available resource status of the first communication device.

According to this design, the second communication device may determine a synchronization accuracy configuration in real time based on the running status of the second communication device and/or the available resource status of the first communication device, so that the synchronization accuracy configuration indicated by the second communication device to the first communication device meets the running status of the second communication device, and an available resource of the first communication device can support time synchronization using the synchronization accuracy configuration.

In a possible design, the second communication device may obtain the first indication or determine the first synchronization accuracy configuration based on a configuration message sent by a network device connected to the second communication device.

In a possible design, the first information includes at least one of the following: available resource information of the first communication device, available resource information of the second communication device, location information of the second communication device, and service information of the second communication device.

In a possible design, the location information of the first communication device includes at least one of the following: latitude and longitude information of the second communication device, cell information of a serving cell of the second communication device, and information about a zone in which the second communication device is located; and
the service information of the second communication device includes a service type or information about a quality of service QoS flow.

In a possible design, when the first information includes the service information of the second communication device, and there are a plurality of pieces of service information of the second communication device, the second communication device may determine the first synchronization accuracy configuration based on the first information by using the following steps:
determining, based on each of the plurality of pieces of service information, a synchronization accuracy configuration corresponding to each piece of service information; and selecting, from synchronization accuracy configurations corresponding to the plurality of pieces of service information, a synchronization accuracy configuration with highest synchronization accuracy as the first synchronization accuracy configuration; or selecting target service information from the plurality of pieces of service information; and using a synchronization accuracy configuration corresponding to the target service information as the first synchronization accuracy configuration.

In a possible design, in the plurality of pieces of service information, the target service information has a highest priority, or the target service information has a lowest delay requirement, or the target service information has a highest synchronization accuracy requirement.

In a possible design, the first synchronization accuracy configuration includes at least one of the following: a first clock type and a first synchronization accuracy requirement; and the first indication is an index value of the first synchronization accuracy configuration; or the first indication includes a time information type information element, where the time information type information element indicates the first clock type; or the first indication includes an uncertainty information element, where the uncertainty information element indicates the first synchronization accuracy requirement.

In a possible design, the first reference time information includes location information of a first reference time corresponding to the first synchronization accuracy configuration, or an index value of the first reference time.

In a possible design, the first message is used to request the first communication device to perform time synchronization by using the first synchronization accuracy configuration. Based on this, the second communication device may further receive a third message from the first communication device, where the third message is used to notify the second communication device that the first communication device allows time synchronization to be performed by using the first synchronization accuracy configuration.

In a possible design, the first communication device is a network device, and the second communication device is a terminal device; or the first communication device is a first terminal device, and the second communication device is a second terminal device.

For a technical effect that can be achieved in the second aspect, refer to the descriptions of the technical effect that can be achieved in the first aspect.

According to a third aspect, an embodiment of this application provides a time synchronization method, applied to a first communication device. The following uses an example in which the first communication device performs the method for description. The method includes:

The first communication device determines a first synchronization accuracy configuration based on first information, where the first information represents a running status of a second communication device and/or an available resource status of the first communication device; and the first communication device sends a first message to the second communication device, where the first message includes first reference time information, the first reference time information is used by the second communication device to perform time synchronization with the first communication device, and the first reference time information is determined based on the first synchronization accuracy configuration.

In the method, the first communication device may determine a synchronization accuracy configuration based on the running status of the second communication device and/or the available resource status of the first communication device, to perform time synchronization with the second communication device. In this way, as a time-providing device, the first communication device may determine a synchronization accuracy configuration that meets the running status of the second communication device and that can be supported by an available resource of the first communication device. In other words, the first communication device may determine a more proper synchronization accuracy configuration meeting a synchronization accuracy requirement of the second communication device, to ensure a TSN/TSC feature of a system. In conclusion, according to the method, the time-providing device may perform time synchronization by using the synchronization accuracy configuration meeting the synchronization accuracy requirement of a time-receiving device, to finally improve reliability of supporting TSN/TSC between the time-providing device and the time-receiving device.

In a possible design, the first information includes at least one of the following: available resource information of the first communication device, available resource information of the second communication device, location information of the second communication device, and service information of the second communication device.

According to this design, the first communication device may determine a synchronization accuracy configuration in real time based on the running status of the second communication device and/or the available resource status of the first communication device, so that the synchronization accuracy configuration determined by the first communication device meets the running status of the second communication device, and an available resource of the first communication device can support time synchronization using the synchronization accuracy configuration.

In a possible design, the location information of the first communication device includes at least one of the following: latitude and longitude information of the second communication device, cell information of a serving cell of the second communication device, and information about a zone in which the second communication device is located; and
the service information of the second communication device includes a service type or information about a quality of service QoS flow.

In a possible design, when the first information includes the service information of the second communication device, and there are a plurality of pieces of service information of the second communication device, the first communication device may determine the first synchronization accuracy configuration based on the first information by using the following steps:
determining, based on each of the plurality of pieces of service information, a synchronization accuracy configuration corresponding to each piece of service information; and selecting, from synchronization accuracy configurations corresponding to the plurality of pieces of service information, a synchronization accuracy configuration with highest synchronization accuracy as the first synchronization accuracy configuration; or selecting target service information from the plurality of pieces of service information; and using a synchronization accuracy configuration corresponding to the target service information as the first synchronization accuracy configuration.

In a possible design, in the plurality of pieces of service information, the target service information has a highest priority, or the target service information has a lowest delay requirement, or the target service information has a highest synchronization accuracy requirement.

In a possible design, the first reference time information includes location information of a first reference time corresponding to the first synchronization accuracy configuration, or an index value of the first reference time.

In a possible design, the first communication device may further send a second message to the second communication device, where the second message includes a first indication, the first indication indicates the first synchronization accuracy configuration, and the second message is used to notify the second communication device that the first communication device performs time synchronization by using the first synchronization accuracy configuration.

In a possible design, the first synchronization accuracy configuration includes at least one of the following: a first clock type and a first synchronization accuracy requirement; and the first indication is an index value of the first synchronization accuracy configuration; or the first indication includes a time information type information element, where the time information type information element indicates the first clock type; or the first indication includes an uncertainty information element, where the uncertainty information element indicates the first synchronization accuracy requirement.

In a possible design, the first communication device is a network device, and the second communication device is a terminal device; or the first communication device is a first terminal device, and the second communication device is a second terminal device.

According to this design, the method may be applied to a mobile communication scenario or a sidelink scenario.

According to a fourth aspect, an embodiment of this application provides a time synchronization method, applied to a first communication device. The following uses an example in which the first communication device performs the method for description. The method includes:

The first communication device sends a first message to a second communication device, where the first message includes first reference time information, the first reference time information is used by the second communication device to perform time synchronization with the first communication device, and the first reference time information is determined based on a first synchronization accuracy configuration; the first communication device receives a second message from the second communication device, where the second message includes a first indication, and the first indication indicates a second synchronization accuracy configuration; and finally, the first communication device sends a third message to the second communication device, where the third message includes time offset information, and the time offset information indicates a first time offset between a second reference time corresponding to the second synchronization accuracy configuration and a first reference time corresponding to the first synchronization accuracy configuration.

In the method, the second communication device may indicate a synchronization accuracy configuration to the first communication device for time synchronization. In this way, as a time-receiving device, the second communication device may determine a more proper synchronization accuracy configuration meeting a synchronization accuracy requirement of the second communication device, to ensure a TSN/TSC feature of a system. According to the method, a time-providing device may perform time synchronization by using the synchronization accuracy configuration meeting the synchronization accuracy requirement of the time-receiving device, to finally improve reliability of supporting TSN/TSC between the time-providing device and the time-receiving device.

In addition, in the method, when switching to a new synchronization accuracy configuration, the first communication device may send time offset information to the second communication device, so that the second communication device may determine, based on the time offset information and reference time information corresponding to an old synchronization accuracy configuration, reference time information corresponding to the new synchronization accuracy configuration, to perform time synchronization with the first communication device. The time offset information indicates a time offset between a reference time corresponding to the new synchronization accuracy configuration and a reference time corresponding to the old synchronization accuracy configuration. Compared with the reference time information, the time offset information includes a smaller data amount. Therefore, according to the method, signaling overheads between the first communication device and the second communication device can be reduced, and processing complexity on a first communication device side can also be reduced. In a scenario in which the first communication device needs to perform time synchronization with a plurality of second communication devices, processing complexity and signaling overheads of the first communication device can be significantly reduced.

In a possible design, the second synchronization accuracy configuration includes at least one of the following: a second clock type and a second synchronization accuracy requirement; and the first indication is an index value of the second synchronization accuracy configuration; or the first indication includes a time information type information element, where the time information type information element indicates the second clock type; or the first indication includes an uncertainty information element, where the uncertainty information element indicates the second synchronization accuracy requirement.

In a possible design, the time offset information includes a value of the first time offset or an index value of the first time offset.

In a possible design, the first communication device may determine the first time offset by using the following steps:
using an offset between the second synchronization accuracy configuration and the first synchronization accuracy configuration as the first time offset; or determining second reference time information based on the second synchronization accuracy configuration; and determining the first time offset based on the second reference time information and the first reference time information.

In a possible design, the third message further includes clock crystal oscillator information or clock crystal oscillator offset information, where the clock crystal oscillator information includes a clock crystal oscillator periodicity or a clock crystal oscillator frequency corresponding to the first synchronization accuracy configuration, and a clock crystal oscillator periodicity or a clock crystal oscillator frequency corresponding to the second synchronization accuracy configuration; and the clock crystal oscillator offset information includes: an offset between the clock crystal oscillator periodicity corresponding to the first synchronization accuracy configuration and the clock crystal oscillator periodicity corresponding to the second synchronization accuracy configuration, and/or an offset between the clock crystal oscillator frequency corresponding to the first synchronization accuracy configuration and the clock crystal oscillator frequency corresponding to the second synchronization accuracy configuration.

According to this design, the second communication device may determine more accurate second reference time information based on the first reference time information, the time offset information, and the clock crystal oscillator information or the clock crystal oscillator offset information, to implement more accurate time synchronization with the first communication device.

In a possible design, the second message is used to request the first communication device to perform time synchronization by using the second synchronization accuracy configuration. Based on this, the first communication device may further send a fourth message to the second communication device, where the fourth message is used to notify the second communication device that the first communication device allows time synchronization to be performed by using the second synchronization accuracy configuration.

In a possible design, the first communication device is a network device, and the second communication device is a terminal device; or the first communication device is a first terminal device, and the second communication device is a second terminal device.

According to this design, the method may be applied to a mobile communication scenario or a sidelink scenario.

According to a fifth aspect, an embodiment of this application provides a time synchronization method, applied to a second communication device. The following uses an example in which the second communication device performs the method for description. The method includes:

The second communication device receives a first message from a first communication device, where the first message includes first reference time information, and the first reference time information is determined based on a first synchronization accuracy configuration; the second communication device performs time synchronization with the first communication device based on the first reference time information; the second communication device sends a second message to the first communication device, where the second message includes a first indication, and the first indication indicates a second synchronization accuracy configuration; the second communication device receives a third message from the first communication device, where the third message includes time offset information, and the time offset information indicates a first time offset between a second reference time corresponding to the second synchronization accuracy configuration and a first reference time corresponding to the first synchronization accuracy configuration; the second communication device determines second reference time information based on the first reference time information and the time offset information; and the second communication device performs time synchronization with the first communication device based on the second reference time information.

In a possible design, the second communication device may further determine the second synchronization accuracy configuration based on first information, where the first information represents a running status of the second communication device and/or an available resource status of the first communication device.

According to this design, the second communication device may determine a synchronization accuracy configuration in real time based on the running status of the second communication device and/or the available resource status of the first communication device, so that the synchronization accuracy configuration indicated by the second communication device to the first communication device meets the running status of the second communication device, and an available resource of the first communication device can support time synchronization using the synchronization accuracy configuration.

In a possible design, the second communication device may obtain the first indication or determine the second synchronization accuracy configuration based on a configuration message sent by a network device connected to the second communication device.

In a possible design, the first information includes at least one of the following: available resource information of the first communication device, available resource information of the second communication device, location information of the second communication device, and service information of the second communication device.

In a possible design, the location information of the second communication device includes at least one of the following: latitude and longitude information of the second communication device, cell information of a serving cell of the second communication device, and information about a zone in which the second communication device is located; and
the service information of the second communication device includes a service type or information about a quality of service QoS flow.

In a possible design, when the first information includes the service information of the second communication device, and there are a plurality of pieces of service information of the second communication device, the first communication device may determine the second synchronization accuracy configuration based on the first information by using the following steps:
determining, based on each of the plurality of pieces of service information, a synchronization accuracy configuration corresponding to each piece of service information; and selecting, from synchronization accuracy configurations corresponding to the plurality of pieces of service information, a synchronization accuracy configuration with highest synchronization accuracy as the second synchronization accuracy configuration; or selecting target service information from the plurality of pieces of service information; and using a synchronization accuracy configuration corresponding to the target service information as the second synchronization accuracy configuration.

In a possible design, in the plurality of pieces of service information, the target service information has a highest priority, or the target service information has a lowest delay requirement, or the target service information has a highest synchronization accuracy requirement.

In a possible design, the second synchronization accuracy configuration includes at least one of the following: a second clock type and a second synchronization accuracy requirement; and the first indication is an index value of the second synchronization accuracy configuration; or the first indication includes a time information type information element, where the time information type information element indicates the second clock type; or the first indication includes an uncertainty information element, where the uncertainty information element indicates the second synchronization accuracy requirement.

In a possible design, the time offset information includes a value of the first time offset or an index value of the first time offset.

In a possible design, the third message further includes clock crystal oscillator information or clock crystal oscillator offset information, where the clock crystal oscillator information includes a clock crystal oscillator periodicity or a clock crystal oscillator frequency corresponding to the first synchronization accuracy configuration, and a clock crystal oscillator periodicity or a clock crystal oscillator frequency corresponding to the second synchronization accuracy configuration; and the clock crystal oscillator offset information includes: an offset between the clock crystal oscillator periodicity corresponding to the first synchronization accuracy configuration and the clock crystal oscillator periodicity corresponding to the second synchronization accuracy configuration, and/or an offset between the clock crystal oscillator frequency corresponding to the first synchronization accuracy configuration and the clock crystal oscillator frequency corresponding to the second synchronization accuracy configuration. Based on this, the second communication device may further perform the following steps: correcting the second reference time information based on the clock crystal oscillator information or the clock crystal oscillator offset information; or correcting the time offset information based on the clock crystal oscillator information or the clock crystal oscillator offset information.

In a possible design, the second message is used to request the first communication device to perform time synchronization by using the second synchronization accuracy configuration. Based on this, the second communication device may further receive a fourth message from the first communication device, where the fourth message is used to notify the second communication device that the first communication device allows time synchronization to be performed by using the second synchronization accuracy configuration.

In a possible design, the first communication device is a network device, and the second communication device is a terminal device; or the first communication device is a first terminal device, and the second communication device is a second terminal device.

For a technical effect that can be achieved in the fifth aspect, refer to the descriptions of the technical effect that can be achieved in the fourth aspect.

According to a sixth aspect, an embodiment of this application provides a time synchronization method, applied to a first communication device. The following uses an example in which the first communication device performs the method for description. The method includes:

The first communication device sends a first message to a second communication device, where the first message includes first reference time information, and the first reference time information is determined based on a first synchronization accuracy configuration; the first communication device determines a second synchronization accuracy configuration based on first information, where the first information represents a running status of the second communication device and/or an available resource status of the first communication device; and the first communication device sends a second message to the second communication device, where the second message includes time offset information, and the time offset information indicates a first time offset between a second reference time corresponding to the second synchronization accuracy configuration and a first reference time corresponding to the first synchronization accuracy configuration.

In the method, the first communication device may determine a synchronization accuracy configuration based on the running status of the second communication device and/or the available resource status of the first communication device, to perform time synchronization with the second communication device. In this way, as a time-providing device, the first communication device may determine a synchronization accuracy configuration that meets the running status of the second communication device and that can be supported by an available resource of the first communication device. In other words, the first communication device may determine a more proper synchronization accuracy configuration meeting a synchronization accuracy requirement of the second communication device, to ensure a TSN/TSC feature of a system. In conclusion, according to the method, the time-providing device may perform time synchronization by using the synchronization accuracy configuration meeting the synchronization accuracy requirement of a time-receiving device, to finally improve reliability of supporting TSN/TSC between the time-providing device and the time-receiving device.

In addition, in the method, when switching to a new synchronization accuracy configuration, the first communication device may send time offset information to the second communication device, so that the second communication device may determine, based on the time offset information and reference time information corresponding to an old synchronization accuracy configuration, reference time information corresponding to the new synchronization accuracy configuration, to perform time synchronization with the first communication device. The time offset information indicates a time offset between a reference time corresponding to the new synchronization accuracy configuration and a reference time corresponding to the old synchronization accuracy configuration. Compared with the reference time information, the time offset information includes a smaller data amount. Therefore, according to the method, signaling overheads between the first communication device and the second communication device can be reduced, and processing complexity on a first communication device side can also be reduced. In a scenario in which the first communication device needs to perform time synchronization with a plurality of second communication devices, processing complexity and signaling overheads of the first communication device can be significantly reduced.

In a possible design, the first information includes at least one of the following: available resource information of the first communication device, available resource information of the second communication device, location information of the second communication device, and service information of the second communication device.

According to this design, the first communication device may determine a synchronization accuracy configuration in real time based on the running status of the second communication device and/or the available resource status of the first communication device, so that the synchronization accuracy configuration determined by the first communication device meets the running status of the second communication device, and an available resource of the first communication device can support time synchronization using the synchronization accuracy configuration.

In a possible design, the location information of the second communication device includes at least one of the following: latitude and longitude information of the second communication device, cell information of a serving cell of the second communication device, and information about a zone in which the second communication device is located; and
the service information of the second communication device includes a service type or information about a quality of service QoS flow.

In a possible design, when the first information includes the service information of the second communication device, and there are a plurality of pieces of service information of the second communication device, the first communication device may determine the second synchronization accuracy configuration based on the first information by using the following steps:
determining, based on each of the plurality of pieces of service information, a synchronization accuracy configuration corresponding to each piece of service information; and selecting, from synchronization accuracy configurations corresponding to the plurality of pieces of service information, a synchronization accuracy configuration with highest synchronization accuracy as the second synchronization accuracy configuration; or selecting target service information from the plurality of pieces of service information; and using a synchronization accuracy configuration corresponding to the target service information as the second synchronization accuracy configuration.

In a possible design, in the plurality of pieces of service information, the target service information has a highest priority, or the target service information has a lowest delay requirement, or the target service information has a highest synchronization accuracy requirement.

In a possible design, the time offset information includes a value of the first time offset or an index value of the first time offset.

In a possible design, the first communication device may determine the first time offset by using the following steps:
using an offset between the second synchronization accuracy configuration and the first synchronization accuracy configuration as the first time offset; or determining second reference time information based on the second synchronization accuracy configuration; and determining the first time offset based on the second reference time information and the first reference time information.

In a possible design, the second message further includes clock crystal oscillator information or clock crystal oscillator offset information, where the clock crystal oscillator information includes a clock crystal oscillator periodicity or a clock crystal oscillator frequency corresponding to the first synchronization accuracy configuration, and a clock crystal oscillator periodicity or a clock crystal oscillator frequency corresponding to the second synchronization accuracy configuration; and the clock crystal oscillator offset information includes: an offset between the clock crystal oscillator periodicity corresponding to the first synchronization accuracy configuration and the clock crystal oscillator periodicity corresponding to the second synchronization accuracy configuration, and/or an offset between the clock crystal oscillator frequency corresponding to the first synchronization accuracy configuration and the clock crystal oscillator frequency corresponding to the second synchronization accuracy configuration.

According to this design, the second communication device may determine more accurate second reference time information based on the first reference time information, the time offset information, and the clock crystal oscillator information or the clock crystal oscillator offset information, to implement more accurate time synchronization with the first communication device.

In a possible design, the first communication device may further send a third message to the second communication device, where the third message includes a first indication, the first indication indicates the second synchronization accuracy configuration, and the third message is used to notify the second communication device that the first communication device performs time synchronization by using the second synchronization accuracy configuration.

In a possible design, the second synchronization accuracy configuration includes at least one of the following: a second clock type and a second synchronization accuracy requirement; and the first indication is an index value of the second synchronization accuracy configuration; or the first indication includes a time information type information element, where the time information type information element indicates the second clock type; or the first indication includes an uncertainty information element, where the uncertainty information element indicates the second synchronization accuracy requirement.

In a possible design, the first communication device is a network device, and the second communication device is a terminal device; or the first communication device is a first terminal device, and the second communication device is a second terminal device.

According to this design, the method may be applied to a mobile communication scenario or a sidelink scenario.

According to a seventh aspect, an embodiment of this application provides a time synchronization method, applied to a second communication device. The following uses an example in which the second communication device performs the method for description. The method includes:

The second communication device receives a first message from a first communication device, where the first message includes first reference time information, and the first reference time information is determined based on a first synchronization accuracy configuration; the second communication device performs time synchronization with the first communication device based on the first reference time information; the second communication device receives a second message from the first communication device, where the second message includes time offset information, and the time offset information indicates a first time offset between a second reference time corresponding to a second synchronization accuracy configuration and a first reference time corresponding to the first synchronization accuracy configuration; the second communication device determines second reference time information based on the first reference time information and the time offset information; and the second communication device performs time synchronization with the first communication device based on the first reference time information.

In a possible design, the time offset information includes a value of the first time offset or an index value of the first time offset.

In a possible design, the second message further includes clock crystal oscillator information or clock crystal oscillator offset information, where the clock crystal oscillator information includes a clock crystal oscillator periodicity or a clock crystal oscillator frequency corresponding to the first synchronization accuracy configuration, and a clock crystal oscillator periodicity or a clock crystal oscillator frequency corresponding to the second synchronization accuracy configuration; and the clock crystal oscillator offset information includes: an offset between the clock crystal oscillator periodicity corresponding to the first synchronization accuracy configuration and the clock crystal oscillator periodicity corresponding to the second synchronization accuracy configuration, and/or an offset between the clock crystal oscillator frequency corresponding to the first synchronization accuracy configuration and the clock crystal oscillator frequency corresponding to the second synchronization accuracy configuration. The second communication device may further perform the following steps:
correcting the second reference time information based on the clock crystal oscillator information or the clock crystal oscillator offset information; or correcting the time offset information based on the clock crystal oscillator information or the clock crystal oscillator offset information.

In a possible design, the second communication device may further receive a third message from the first communication device, where the third message includes a first indication, the first indication indicates the second synchronization accuracy configuration, and the third message is used to notify the second communication device that the first communication device performs time synchronization by using the second synchronization accuracy configuration.

In a possible design, the second synchronization accuracy configuration includes at least one of the following: a second clock type and a second synchronization accuracy requirement; and the first indication is an index value of the second synchronization accuracy configuration; or the first indication includes a time information type information element, where the time information type information element indicates the second clock type; or the first indication includes an uncertainty information element, where the uncertainty information element indicates the second synchronization accuracy requirement.

In a possible design, the first communication device is a network device, and the second communication device is a terminal device; or the first communication device is a first terminal device, and the second communication device is a second terminal device.

According to an eighth aspect, an embodiment of this application provides a communication apparatus, including a unit configured to perform each step in any one of the first aspect to the seventh aspect. Optionally, the communication apparatus may include a communication unit and a processing unit. The communication unit is configured to receive and send data, and the processing unit is configured to perform the method according to any one of the foregoing aspects.

According to a ninth aspect, an embodiment of this application provides a communication device, including a transceiver, a memory, and a processor. The transceiver is configured to receive and send signals; the memory is configured to store program instructions; and the processor is configured to read the program instructions in the memory, to implement the method according to any one of the foregoing aspects.

According to a tenth aspect, an embodiment of this application provides a communication device, including at least one processing element and at least one storage element. The at least one storage element is configured to store a program and data, and the at least one processing element is configured to perform the method according to any one of the foregoing aspects of this application.

According to an eleventh aspect, an embodiment of this application further provides a computer program product. When the computer program product runs on a computer, the computer is enabled to perform the method according to any one of the foregoing aspects. Optionally, the computer may be a communication device.

According to a twelfth aspect, an embodiment of this application further provides a computer-readable storage medium. The computer-readable storage medium stores a computer program, and when the computer program is executed by a computer, the computer is enabled to perform the method according to any one of the foregoing aspects. Optionally, the computer may be a communication device.

According to a thirteenth aspect, an embodiment of this application further provides a chip. The chip is configured to read a computer program stored in a memory, to perform the method according to any one of the foregoing aspects. Optionally, the chip may include a processor. The processor is coupled to the memory, and is configured to read the computer program stored in the memory, to implement the methods provided in the foregoing embodiments. Optionally, the chip may further include components such as the memory, a communication interface, and a power supply module. The memory is configured to store the computer program, the communication interface is configured to receive and send data, and the power supply unit is configured to supply power to the processor.

According to a fourteenth aspect, an embodiment of this application further provides a chip system. The chip system includes a processor, configured to support a computer apparatus in implementing the method according to any one of the foregoing aspects. In a possible design, the chip system further includes a memory, and the memory is configured to store a program and data that are necessary for the computer apparatus. The chip system may include a chip, or may include a chip and another discrete device.

### BRIEF DESCRIPTION OF DRAWINGS

FIG. 1A is a diagram of an architecture of a communication system according to an embodiment of this application;
FIG. 1B is a diagram of a sidelink application scenario according to an embodiment of this application;
FIG. 1C is a diagram of another sidelink application scenario according to an embodiment of this application;
FIG. 2A is a diagram of a reference time transfer manner according to an embodiment of this application;
FIG. 2B is a diagram of another reference time transfer manner according to an embodiment of this application;
FIG. 3 is a diagram of a communication system according to an embodiment of this application;
FIG. 4 is a flowchart of a time synchronization method according to an embodiment of this application;
FIG. 5 is a flowchart of another time synchronization method according to an embodiment of this application;
FIG. 6 is a flowchart of another time synchronization method according to an embodiment of this application;
FIG. 7 is a flowchart of still another time synchronization method according to an embodiment of this application;
FIG. 8 is a diagram of a structure of a communication apparatus according to an embodiment of this application; and
FIG. 9 is a diagram of a structure of a communication device according to an embodiment of this application.

### DESCRIPTION OF EMBODIMENTS

This application provides a time synchronization method and an apparatus, so that a time-providing device can perform time synchronization by using a synchronization accuracy configuration meeting a synchronization accuracy requirement of a time-receiving device. The method and the apparatus are based on a same technical concept. Because problem-resolving principles of the method and the apparatus are similar, mutual reference may be made to implementations of the apparatus and the method, and repeated descriptions are not described.

The following describes some terms in this application, to help a person skilled in the art have a better understanding.
(1) A communication device is a device that has a communication function and can be connected to another device for communication. An implementation form of the communication device is not limited in this application. Optionally, the communication device may be a terminal device, a network device, or the like.
(2) A terminal device is a device that provides voice and/or data connectivity for a user. The terminal device may also be referred to as user equipment (user equipment, UE), a mobile station (mobile station, MS), a mobile terminal (mobile terminal, MT), a subscriber unit, a subscriber station, a mobile station, a remote station, a remote terminal, a mobile device, a user terminal, a terminal, a wireless communication device, a user agent, a user apparatus, or the like.
   For example, the terminal device may be a handheld device, a vehicle-mounted device, or a roadside unit that has a wireless connection function. Currently, some examples of the terminal device include a mobile phone (mobile phone), a tablet computer, a notebook computer, a palmtop computer, a mobile internet device (mobile internet device, MID), a smart point of sale (point of sale, POS), a wearable device, a virtual reality (virtual reality, VR) device, an augmented reality (augmented reality, AR) device, a head-mounted display (head-mounted display, HMD), a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), various smart meters (for example, a smart water meter, a smart electricity meter, and a smart gas meter), eLTE-DSA UE, a device with an integrated access and backhaul (integrated access and backhaul, IAB) capability, a vehicle-mounted electronic control unit (electronic control unit, ECU), a vehicle-mounted computer, a vehicle-mounted cruise system, a remote information processor (telematics box, T-BOX), and the like.
(3) A network device is a device located in a communication network. The network device may provide a network service for the terminal device. An implementation form of the network device is not limited in this application. Optionally, the network device may include an access network device such as a base station and an access point (access point, AP), and may further include a core network device located in a core network.
(4) A base station is a device that connects the terminal device to a wireless network in a mobile communication system. As a node in a radio access network, the base station may also be referred to as a (radio) access network ((radio) access network, (R)AN) node (or device).

Currently, some examples of the base station include: a next-generation NodeB (generation NodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an enterprise LTE discrete spectrum aggregation (Enterprise LTE Discrete Spectrum Aggregation, eLTE-DSA) base station, and the like.

In addition, in a network structure, the base station may include a central unit (central unit, CU) node and a distributed unit (distributed unit, DU) node. In this structure, protocol layers of the base station are split. Functions of some protocol layers are centrally controlled by the CU, functions of some or all of remaining protocol layers are distributed in the DU, and the CU centrally controls the DU.

(5) Accurate reference timing (Accurate reference timing) is used to implement accurate time synchronization between two devices. A specific process includes: One device (or referred to as a time-providing device) may send reference time information to another device (or referred to as a time-receiving device), where the reference time information indicates a time corresponding to a reference time point, for example, the reference time point may be a frame boundary or a time location, and the reference time point may be indicated by the reference time information or determined according to a predefined rule.

(6) A synchronization accuracy configuration is used to implement time synchronization in set accuracy between two devices. Optionally, the synchronization accuracy configuration may be reflected in the following two manners, but is not limited to: a clock (clock) type and a synchronization accuracy requirement.

Currently, there are a plurality of clock types in the communication field based on different specific application scenarios. Synchronization accuracy varies with a clock type. Therefore, the clock type may be used as an implementation of the synchronization accuracy configuration. For example, in this application, the clock type may include, but is not limited to, the following types: a fifth generation system (5th generation system, 5GS) clock, a global navigation satellite system (global navigation satellite system, GNSS) clock, a time sensitive networking (time sensitive networking, TSN) clock, a device internal clock (internal clock), and a local clock (local clock). The GNSS clock may be further classified into a global positioning system (global positioning system, GPS) clock, a Beidou satellite positioning system (BeiDou navigation satellite system, BDS) clock, a Galileo satellite navigation system (Galileo satellite navigation system) clock, and the like. The TSN clock may also be further classified into a plurality of different clock types.

A synchronization accuracy requirement may be a time granularity of a reference time point used to determine time synchronization. Different synchronization accuracy requirements correspond to different time granularity values, for example, 1 ns, 10 ns, and 100 ns.

It should be understood that in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following pieces (items)" or a similar expression thereof indicates any combination of these items, including a single item (piece) or any combination of a plurality of items (pieces). For example, at least one of a, b, or c may represent: a, b, c, a and b, a and c, b and c, or a, b and c, where a, b, and c may be a singular or plural number.

In embodiments of this application, descriptions such as "when...", "in a case of...", and "if" all mean that an execution body performs corresponding processing in a specific objective situation, but are not intended to limit time, do not require that the execution body has a determining action during implementation, and do not mean another limitation either.

It should be noted that in this application, "indicating" may include directly indicating and indirectly indicating. When a piece of information is described to indicate A, the information may directly indicate A or indirectly indicate A, but it does not mean that the information necessarily carries A. In an example in which first information indicates first content, the first information may include the first content, or may include a part of the first content or an identifier, an index, or the like of the first content, or may include an algorithm, a calculation parameter, or the like for determining the first content. An "indicating" manner is not limited in this application.

In this application, "containing/including A" may be equivalent to "containing/including information about A". The A information indicates A.

"Corresponding to" may be replaced with "associated", "including", or the like. "Use" may be replaced with "switch", "replace", "update", "adopt", or the like. "Synchronization accuracy" may be replaced with "time synchronization accuracy".

In addition, it should be understood that in description of this application, terms such as "first" and "second" are merely used for distinguishing and description, but should not be understood as indicating or implying relative importance, or should not be understood as indicating or implying a sequence.

"Time-providing" in this application may be understood as "transferring time information", or transferring a piece of standard time information (or a reference time signal) to a user who needs time information, to synchronize time of an entire system.

The following describes embodiments of this application in detail with reference to accompanying drawings.

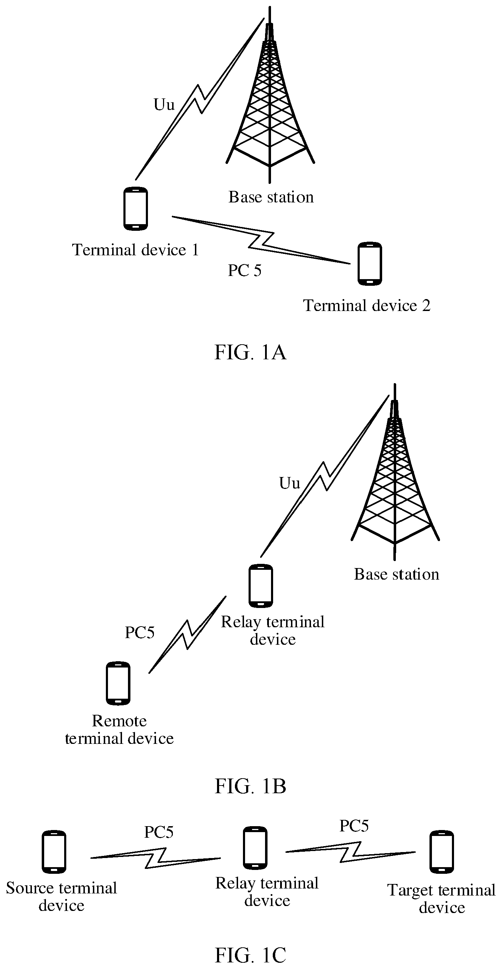

FIG. 1A shows an architecture of a possible communication system to which a time synchronization method is applicable according to an embodiment of this application. As shown in FIG. 1A, the communication system includes a base station and a terminal device (for example, a terminal device 1 and a terminal device 2 in FIG. 1A).

The base station is a network side entity that can receive and transmit radio signals, and is responsible for providing a radio access related service for a terminal device in a cell managed by the base station, and implementing a physical layer function and resource scheduling and radio resource management, quality of service (Quality of Service, QoS) management, radio access control, and mobility management functions. The terminal device accesses a mobile communication system by using a radio access service of the base station, and is finally connected to a data network by using a service provided by each network element in a core network, to implement a service of the terminal device.

The terminal device is a user side entity that can receive and transmit radio signals, and needs to access a network through the base station. The terminal device may be any type of device that provides voice and/or data connectivity for a user.

In the communication system shown in FIG. 1A, the terminal device may support a sidelink (sidelink, SL) communication technology. The sidelink communication technology is a near field communication technology in which terminal devices can be directly connected to each other, and is also referred to as a proximity service (proximity service, ProSe) communication technology or a device-to-device (device-to-device, D2D) communication technology. In the communication system, a plurality of terminal devices that are close in geographical locations and that support sidelink communication may form a sidelink communication system (which may also be referred to as a sidelink communication sub-system, a sidelink system, or the like). In the sidelink communication system, sidelink communication may be performed between two terminal devices through a direct link.

The sidelink communication technology supports unicast transmission, multicast transmission, and broadcast transmission. In addition, the terminal device performing sidelink communication may determine a transmission resource (denoted as an SL resource) in the following resource allocation mode:
Mode 1 (mode 1): The base station may schedule the SL resource for the terminal device. For example, when the terminal device is in an RRC connected state, the base station may schedule the SL resource for the terminal device by using downlink control information (downlink control indication, DCI), or configure an SL configured grant (SL configured grant) for the terminal device by using an RRC message.
Mode 2 (mode 2): The terminal device may select the SL resource from an SL resource pool. For example, when the terminal device is in an RRC connected state, an RRC inactive state, an RRC idle state, or an in coverage (out of coverage, OOC) state, the terminal device may determine the transmission resource in the mode 2. Optionally, the SL resource pool may be configured by the base station when the terminal device performs a current service, or may be preconfigured by the base station. This is not limited in this application.

Based on the sidelink communication technology, network extension can be further implemented. For example, a terminal device that supports sidelink communication may be used as a relay device to implement communication between two communication devices (including at least one terminal device) that are located far away from each other or whose signal transmission quality is poor, as shown in FIG. 1B and FIG. 1C.

In an application scenario shown in FIG. 1B, a remote terminal device (remote UE) may be connected to a base station through a relay terminal device (relay UE), to implement a service of the remote terminal device. The application scenario shown in FIG. 1B may be referred to as a sidelink-based terminal device-to-network relay (sidelink UE-to-network relay) scenario.

In an application scenario shown in FIG. 1C, a source terminal device (source UE) may communicate with a target terminal device (target UE) through a relay terminal device (relay UE). The scenario shown in FIG. 1C may be referred to as a sidelink-based terminal device-to-terminal device relay (sidelink UE-to-UE relay) scenario.

In the foregoing communication system and application scenarios, the base station and the terminal device may be connected through an air interface (namely, a Uu interface), to implement communication (such communication may be briefly referred to as Uu communication or cellular network communication) between the terminal device and the base station. A direct link may be established, through a proximity service communication 5 (ProSe communication 5, PC5) interface, between adjacent terminal devices that support sidelink communication, to transmit sidelink data.

It should be further noted that the communication system and the application scenarios shown in FIG. 1A to FIG. 1C are used as an example, and do not constitute a limitation on a communication system and an application scenario to which the method provided in embodiments of this application is applicable. Embodiments of this application may be further applied to communication systems of various types and standards, for example, a 5th generation (5th Generation, 5G) communication system, a long term evolution (Long Term Evolution, LTE) communication system, vehicle-to-everything (vehicle-to-everything, V2X), long term evolution-internet of vehicles (LTE-vehicle, LTE-V), vehicle-to-vehicle (vehicle-to-vehicle, V2V), an internet of vehicles, machine type communication (Machine Type communication, MTC), an internet of things (internet of things, IoT), long term evolution-machine to machine (LTE-machine to machine, LTE-M), machine-to-machine (machine-to-machine, M2M), and a wireless local area network system. This is not limited in embodiments of this application.

Currently, in a mobile communication system that supports a TSN/time sensitive communication (time sensitive communication, TSC) feature, accurate synchronization is needed between a base station and a terminal device. For example, the base station may send reference time information to the terminal device based on a 5GS clock. Optionally, the base station may perform accurate reference time deliver (accurate reference time deliver) in the following two manners.

### Manner 1: Broadcast manner

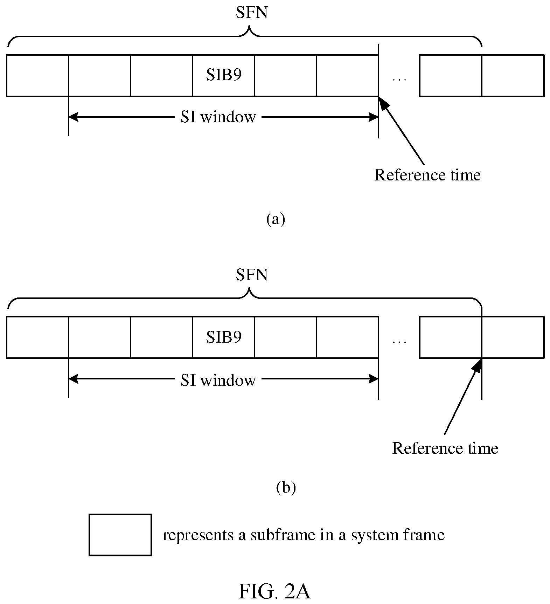

Optionally, the base station may perform accurate reference time deliver through a system information block (system information block, SIB) 9. In this manner, a reference time (or referred to as a reference time point) is located at an end boundary of a system information (system information, SI) window (namely, an SI window) transmitted through the SIB9 or a system frame (system frame, SF) boundary after the end boundary, as shown in (a) and (b) in FIG. 2A.

### Manner 2: Unicast manner

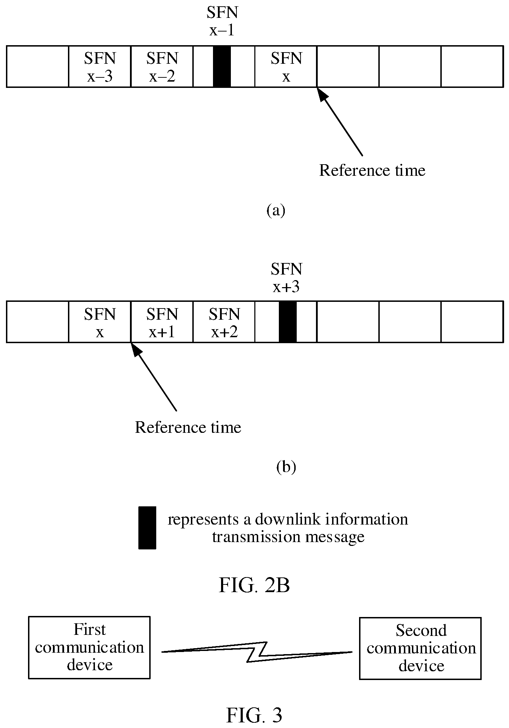

Optionally, the base station may perform accurate reference time deliver by using a downlink information transfer message (for example, DL Information Transfer). As shown in (a) and (b) in FIG. 2B, in this manner, a reference time (or referred to as a reference time point) is located at an end moment of a reference SF (namely, an SFN x in the figure) of a primary cell of the terminal device. The downlink information transfer message may include a system frame number (system frame number, SFN) of the reference SF.

Optionally, the SIB9 or the downlink information transfer message may include reference time information (for example, ReferenceTimeInfo), which is used to carry reference time information, that is, indicates time information corresponding to a reference time point.

For example, based on a specific application scenario, the reference time information may include, but is not limited to, at least one of the following information elements.

Time (time) information element: The time information element indicates a reference time (for example, a value of the reference time is based on a time granularity of 10 ns).

Time information type (timeInfoType) information element: If the information element does not exist, the reference time indicated by the time information element is a GPS clock. If the information element exists and is set to a local clock, it indicates that a source of the reference time indicated by the time information element is undefined.

Uncertainty (uncertainty) information element: The uncertainty information element is used to support uncertainty of the reference time information. For example, a time granularity of the uncertainty is 25 ns.

The reference time point information indicates a reference time point. For example, the reference time point information may include a reference SFN (referenceSFN) information element or a reference direct frame number (direct frame number, DFN) information element. The reference SFN (referenceSFN) information element may indicate a reference SFN corresponding to the reference time information. The reference DFN information element indicates a reference DFN corresponding to the reference time information.

It should be noted that some or all content of the reference time information may be configured based on information provided by a core network device. This is not limited in this application.

It can be learned from the foregoing descriptions of the conventional solution that the base station configures, for the terminal device by using the reference time information, a reference time for performing time synchronization. Therefore, in this solution, synchronization accuracy of the reference time configured by the base station may not meet a requirement of the terminal device. Consequently, reliability of TSN/TSC of a system is low. In addition, in an SL scenario, as a time-providing device, the terminal device cannot obtain, from a network device, auxiliary information for determining the reference time information. Therefore, in the SL scenario, a proper time synchronization solution also needs to be researched to meet a synchronization accuracy requirement of a time-receiving device, to ensure the reliability of TSN/TSC of the system.

Based on this, to resolve the foregoing problem and enable the time-providing device to perform time synchronization by using a synchronization accuracy configuration meeting the synchronization accuracy requirement of the time-receiving device, this application provides the following several embodiments. Embodiments of this application may be applied to a communication system including a first communication device and a second communication device. As shown in FIG. 3, a wireless communication connection may be established between two communication devices. It should be noted that an application scenario to which the communication system shown in FIG. 3 is applicable is not limited in this application. For example, the two communication devices in the communication system may be the two communication devices in the application scenario shown in FIG. 1A, FIG. 1B, or FIG. 1C. In other words, as a time-providing device, the first communication device may be a network device or a terminal device. As a time-receiving device, the second communication device may be the network device or the terminal device. For example, the first communication device is the network device, and the second communication device is the terminal device. For another example, the first communication device is a first terminal device, and the second communication device is a second terminal device. For another example, the first communication device is a first network device, and the second communication device is a second network device.

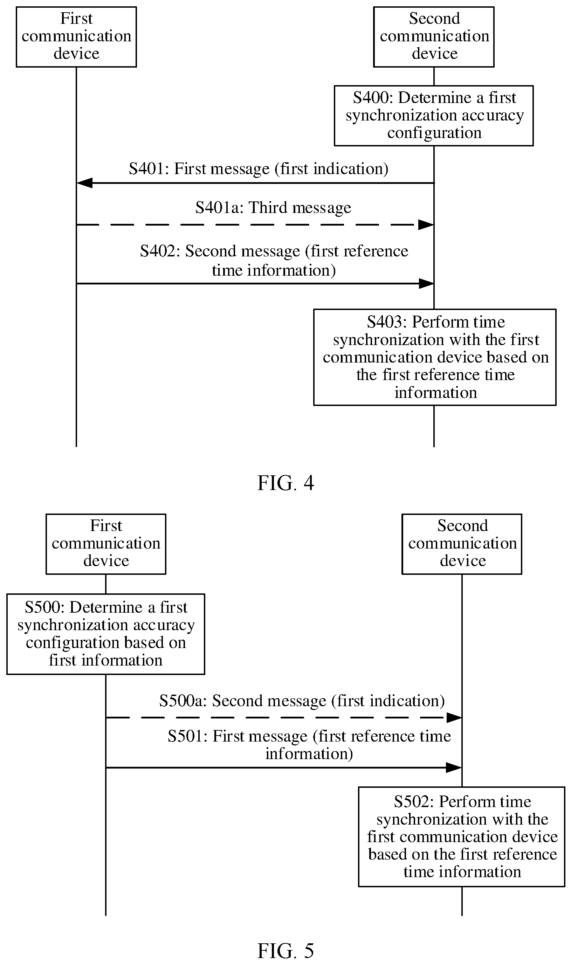

Embodiment 1: FIG. 4 is a flowchart of a time synchronization method according to this embodiment. With reference to FIG. 4, the following specifically describes the time synchronization method provided in Embodiment 1.

S401: A second communication device sends a first message to a first communication device. The first communication device receives the first message from the second communication device. The first message includes a first indication, and the first indication indicates a first synchronization accuracy configuration.

It may be understood that the first synchronization accuracy configuration may be a synchronization accuracy configuration that the second communication device requests to use.

In some application scenarios, before S401, for example, when the first communication device establishes a connection to the second communication device, the first communication device may perform time synchronization with the second communication device by using a second synchronization accuracy configuration. The second synchronization accuracy configuration may be specified in a communication protocol, determined by the first communication device or default, set by a user of the first communication device, configured by a network device, or configured by user equipment. This is not limited in this application.

In some other application scenarios, when the first communication device establishes a connection to the second communication device, the time synchronization method provided in this embodiment of this application may be performed, that is, the second communication device may specify, for the second communication device in S401, a synchronization accuracy configuration needed by the second communication device.

With reference to the descriptions of the synchronization accuracy configuration in (6) above, in this embodiment of this application, the first synchronization accuracy configuration may include at least one of the following: a first clock type and a first synchronization accuracy requirement. For example, the first clock type may be any one of a 5GS clock, a GNSS clock, a TSN clock, a device internal clock, and a local clock.

Based on this, optionally, the first indication may be implemented in at least one of the following manners.

Manner 1: The first indication is an index value of the first synchronization accuracy configuration. Optionally, both the first communication device and the second communication device store a plurality of synchronization accuracy configurations and an index value corresponding to each synchronization accuracy configuration. In this way, the second communication device may indicate the first synchronization accuracy configuration by using the index value of the first synchronization accuracy configuration, and the first communication device may also determine the first synchronization accuracy configuration from the plurality of synchronization accuracy configurations based on the index value of the first synchronization accuracy.

For example, the first communication device and the second communication device may exchange the plurality of synchronization accuracy configurations (for example, a plurality of clock types) and the index value of each synchronization accuracy configuration in advance. Alternatively, the plurality of synchronization accuracy configurations and the index value of each synchronization accuracy configuration in the first communication device and the second communication device are predefined, set by a user, specified in a protocol, configured by a network device, or configured by user equipment. In conclusion, a specific implementation of how the two communication devices obtain the plurality of synchronization accuracy configurations and the index value corresponding to each synchronization accuracy configuration is not limited in this embodiment of this application.

Manner 2: The first indication includes a time information type information element, where the time information type information element indicates the first clock type.

Manner 3: The first indication includes an uncertainty information element, where the uncertainty information element indicates the first synchronization accuracy requirement.

It should be noted that, in Manner 2 or Manner 3, the information element included in the first indication may reuse an information element in an existing reference time information information element to indicate the first synchronization accuracy configuration. For example, the time information type information element or the uncertainty information element may be the corresponding time (time) information element or uncertainty (uncertainty) information element in the reference time information (for example, ReferenceTimeInfo) in the conventional solution in which the base station perform reference time deliver to the terminal device. Optionally, the information element included in the first indication in Manner 2 or Manner 3 may alternatively be a dedicated new information element. This is not limited in this application.

In this embodiment of this application, before performing S401, the second communication device may further determine the first synchronization accuracy configuration in S400, or obtain the first indication from a network device connected to the second communication device. The following describes a process in which the second communication device determines the first synchronization accuracy configuration.

S400: The second communication device determines the first synchronization accuracy configuration.

In S400, the second communication device may determine a synchronization accuracy configuration meeting a synchronization accuracy requirement of the second communication device.

Optionally, the second communication device may determine the first synchronization accuracy configuration based on first information, where the first information represents a running status of the second communication device and/or an available resource status of the first communication device.

In an implementation, the first information includes at least one of the following: available resource information of the first communication device, available resource information of the second communication device, location information of the second communication device, and service information of the second communication device.

In the process, the second communication device may determine the first synchronization accuracy configuration based on the first information by using a specified rule. The specified rule may be generated by the second communication device, set by a user, specified in a protocol, agreed on by the first communication device and the second communication device, configured by a network device, or configured by user equipment. This is not limited in this application.

Optionally, when the first information includes the available resource information of the first communication device, the specified rule includes a correspondence between the available resource information of the first communication device and a synchronization accuracy configuration. When the first information includes the available resource information of the second communication device, the specified rule includes a correspondence between the available resource information of the second communication device and the synchronization accuracy configuration. When the first information includes the location information of the second communication device, the specified rule includes a correspondence between the location information of the second communication device and the synchronization accuracy configuration. When the first information includes the service information of the second communication device, the specified rule includes a correspondence between the service information of the second communication device and the synchronization accuracy configuration. In this way, the second communication device may determine the first synchronization accuracy configuration based on each piece of content in the first information by using a corresponding specified rule.

The available resource status of the first communication device may affect determining and transmitting reference time information by the first communication device, and the available resource status of the second communication device may also affect a process in which the second communication device receives the reference time information and performs time synchronization with the first communication device based on first reference time information. Therefore, the second communication device may consider these factors in a process of determining the first synchronization accuracy configuration. For example, an available resource of the first communication device or the second communication device may include, but is not limited to, an available communication resource and/or an available compute resource, and the available resource information may include information such as a type and a resource amount of the available resource. For example, the available communication resource may be a resource that can be used for transmission, for example, a bandwidth frequency domain resource, a time domain resource, or a time-frequency domain resource. For example, the available compute resource may be one or more of a storage resource, a hardware resource, and a software resource that can be used for computing.

Optionally, the location information of the second communication device includes at least one of the following: latitude and longitude information of the second communication device, cell information of a serving cell (one or more serving cells) of the second communication device, and information about a zone (zone) in which the second communication device is located.

Optionally, the service information of the second communication device includes a service type or information about a quality of service (quality of service, QoS) flow. It should be noted that the service information of the second communication device may include service information between the second communication device and the first communication device, or service information between the second communication device and a third communication device. This is not limited in this application. It may be understood that a correspondence between a QoS flow and a synchronization accuracy configuration may be a correspondence between a QoS parameter associated with the QoS flow and the synchronization accuracy configuration.

It should be noted that the foregoing is used as an example, and does not constitute any limitation on content of the first information. For example, the first information may further include a load parameter of the second communication device, relative location information between the first communication device and the second communication device, location information of the first communication device, and the like.

It should be noted that the second communication device may obtain some content in the first information from the first communication device. For example, the second communication device may obtain the available resource information of the first communication device from the first communication device. When the first communication device has a positioning function (for example, the first communication device is a base station), the second communication device may further obtain the location information of the second communication device from the first communication device. Optionally, the second communication device may alternatively obtain the service information of the second communication device from another communication device (the first communication device or the third communication device) having a communication service with the second communication device.

In an implementation, when the first information includes the service information of the first communication device, and there are a plurality of pieces of service information of the first communication device, the first communication device may determine the first synchronization accuracy configuration based on the first information in any one of the following manners.

Manner 1: The second communication device determines, based on each of the plurality of pieces of service information, a synchronization accuracy configuration corresponding to each piece of service information; and selects, from synchronization accuracy configurations corresponding to the plurality of pieces of service information, a synchronization accuracy configuration with highest synchronization accuracy as the first synchronization accuracy configuration.

Manner 2: The second communication device selects target service information from the plurality of pieces of service information; and uses a synchronization accuracy configuration corresponding to the target service information as the first synchronization accuracy configuration. Optionally, the target service information may be selected by the first communication device according to a specific principle, or may be randomly selected. This is not limited in this application. For example, in the plurality of pieces of service information, the target service information has a highest priority, the target service information has a smallest delay requirement (for example, a packet delay budget (packet delay budget, PDB)), or the target service information has a highest synchronization accuracy requirement.

In an implementation, when the first information includes a plurality of types of information in the foregoing various types of information, the second communication device may determine a corresponding synchronization accuracy configuration for each type of information, and then select a synchronization accuracy configuration with a highest synchronization accuracy configuration as the first synchronization accuracy configuration.

In an implementation, the second communication device may perform S400 and S401 in, but not limited to, the following implementations.

Manner a1: An upper layer of the second communication device performs S400 to determine the first synchronization accuracy configuration (for a specific process, refer to the foregoing descriptions), and indicates the first synchronization accuracy configuration to an access stratum (access stratum, AS). The AS performs S401 to send the first message to the first communication device. For example, the upper layer may include, but is not limited to, any one of the following of the second communication device: an application layer, a V2X layer, a PC5-S layer, and a ProSe layer.

Manner a2: The AS of the second communication device performs S400 and S401, that is, the AS determines the first synchronization accuracy configuration (for a specific process, refer to the foregoing descriptions), and sends the first message to the first communication device. Optionally, the specified rule used by the AS to determine the first synchronization accuracy configuration may be configured by the upper layer of the second communication device for the AS.

In some other embodiments, the second communication device may further determine the first synchronization accuracy configuration in the following manner: The network device connected to the second communication device may determine the first synchronization accuracy configuration for the second communication device based on a current running status of the second communication device and/or an available resource status of the first communication device (for a specific process, refer to the foregoing descriptions), and notify the second communication device of the first synchronization accuracy configuration.

S402: The first communication device sends a second message to the second communication device. The second communication device receives the second message from the first communication device. The second message includes first reference time information. The first reference time information is used by the second communication device to perform time synchronization with the first communication device, and the first reference time information is determined based on the first synchronization accuracy configuration.

In S402, after receiving the first message in S401, the first communication device may determine the first synchronization accuracy configuration indicated by the first indication in the first message, and then determine the first reference time information based on the first synchronization accuracy configuration, and finally, the first communication device sends, to the second communication device, the second message carrying the first reference time information.

In an implementation, the first reference time information indicates a first reference time corresponding to the first synchronization accuracy configuration. Optionally, the first reference time information may include location information (namely, reference time point information corresponding to the first reference time corresponding to the first synchronization accuracy configuration) of the first reference time corresponding to the first synchronization accuracy configuration, or an index value of the first reference time.

Optionally, in an implementation, the first communication device and the second communication device interact with each other and agree on a plurality of reference times and an index value corresponding to each reference time in advance. Alternatively, a plurality of reference times and an index value of each reference time in the first communication device and the second communication device are predefined, are set by a user, or are specified in a protocol. This is not limited in this application. The second communication device may determine the first reference time based on the index value of the first reference time.

Optionally, before S402 is performed, the first communication device and the second communication device may further perform S401a, to notify the second communication device that the first communication device allows time synchronization to be performed by using the first synchronization accuracy configuration.

S401a: This step is an optional step. Before performing S402, the first communication device may further send a third message to the second communication device. The second communication device receives the third message from the first communication device. The third message is used to notify the second communication device that the first communication device allows time synchronization to be performed by using the first synchronization accuracy configuration.

Optionally, when the first message is used to request the first communication device to perform time synchronization by using the first synchronization accuracy configuration, the third message may be used as a response message of the first message.

S403: The second communication device performs time synchronization with the first communication device based on the first reference time information.

In this step, the second communication device may perform time synchronization with the first communication device based on the first reference time indicated by the first reference time information. For a specific process, refer to a time synchronization process in a conventional technology. Details are not described in this application.

In conclusion, this embodiment of this application provides the time synchronization method. In the method, the second communication device may indicate a synchronization accuracy configuration to the first communication device for time synchronization. In this way, as a time-receiving device, the second communication device may determine a more proper synchronization accuracy configuration meeting a synchronization accuracy requirement of the second communication device, to ensure a TSN/TSC feature of a system. Further, the second communication device may determine a synchronization accuracy configuration in real time based on the running status of the second communication device and/or the available resource status of the first communication device, so that the synchronization accuracy configuration indicated by the second communication device to the first communication device meets the running status of the first communication device, and an available resource of the first communication device can support time synchronization using the synchronization accuracy configuration. In conclusion, according to the method, a time-providing device may perform time synchronization by using the synchronization accuracy configuration meeting the synchronization accuracy requirement of the time-receiving device, to finally improve reliability of supporting TSN/TSC between the time-providing device and the time-receiving device.

Embodiment 2: FIG. 5 is a flowchart of a time synchronization method according to an embodiment of this application. With reference to FIG. 5, the following specifically describes the method provided in Embodiment 2.

S500: A first communication device determines a first synchronization accuracy configuration based on first information. The first information represents a running status of a second communication device and/or an available resource status of the first communication device.

It may be understood that the first synchronization accuracy configuration may be a synchronization accuracy configuration determined by the first communication device for performing time synchronization with the second communication device.

In some application scenarios, before S500, for example, when the first communication device establishes a connection to the second communication device, the first communication device may perform time synchronization with the second communication device by using a second synchronization accuracy configuration. The second synchronization accuracy configuration may be specified in a communication protocol, determined by the first communication device or default, set by a user of the first communication device, configured by a network device, or configured by user equipment. This is not limited in this application.

In some other application scenarios, when the first communication device establishes a connection to the second communication device, the time synchronization method provided in this embodiment of this application may be performed, that is, the first communication device may determine, in S500, a synchronization accuracy configuration used for time synchronization with the second communication device.

In this embodiment of this application, for both the first information and a process in which the first communication device determines the first synchronization accuracy configuration based on the first information, refer to the descriptions of step S400 in Embodiment 1. Details are not described herein again. It should be noted that some content, for example, available resource information of the second communication device, location information of the second communication device, or service information of the second communication device, in the first information may be obtained by the first communication device from the second communication device, a network device connected to the second communication device, or a network device connected to the first communication device.

In some other embodiments, the network device connected to the first communication device may determine the first synchronization accuracy configuration for the second communication device based on the first information (for a specific process, refer to the descriptions of S400 in Embodiment 1), and notify the first communication device of the first synchronization accuracy.

S501: The first communication device sends a first message to the second communication device. The second communication device receives the first message from the first communication device. The first message includes first reference time information. The first reference time information is used by the second communication device to perform time synchronization with the first communication device, and the first reference time information is determined based on the first synchronization accuracy configuration.

In S501, the first communication device may determine the first reference time information based on the first synchronization accuracy configuration determined in S500, and then send, to the second communication device, the first message carrying the first reference time information.

S502: The second communication device performs time synchronization with the first communication device based on the first reference time information.

For processes of S501 and S502 and descriptions of the first reference time information, refer to the corresponding descriptions of S402 and S403 in Embodiment 1. Details are not described herein again.

Optionally, before S501 is performed, the first communication device and the second communication device may further perform S500a, to notify the second communication device that the first communication device performs time synchronization by using the first synchronization accuracy configuration.

S500a: This step is an optional step. Before performing S501, the first communication device may further send a second message to the second communication device. The second communication device receives the second message from the first communication device. The second message is used to notify the second communication device that the first communication device performs time synchronization by using the first synchronization accuracy configuration. The second message may include a first indication, and the first indication indicates the first synchronization accuracy configuration. For a specific implementation of the first indication, refer to the descriptions (including Manner 1 to Manner 3) of the first indication in Embodiment 1. Details are not described herein again.

In conclusion, this embodiment of this application provides the time synchronization method. In the method, the first communication device may determine a synchronization accuracy configuration based on the running status of the second communication device and/or the available resource status of the first communication device, to perform time synchronization with the second communication device. In this way, as a time-providing device, the first communication device may determine a synchronization accuracy configuration that meets the running status of the second communication device and that can be supported by an available resource of the first communication device. In other words, the first communication device may determine a more proper synchronization accuracy configuration meeting a synchronization accuracy requirement of the second communication device, to ensure a TSN/TSC feature of a system. In conclusion, according to the method, the time-providing device may perform time synchronization by using the synchronization accuracy configuration meeting the synchronization accuracy requirement of a time-receiving device, to finally improve reliability of supporting TSN/TSC between the time-providing device and the time-receiving device.

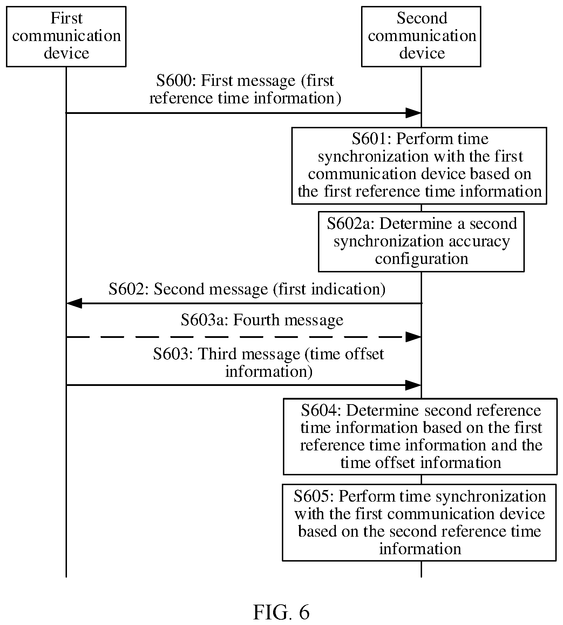

Embodiment 3: FIG. 6 is a flowchart of a time synchronization method according to an embodiment of this application. With reference to FIG. 6, the following specifically describes the method provided in Embodiment 3.

S600: A first communication device sends a first message to a second communication device. The second communication device receives the first message from the first communication device. The first message includes first reference time information. The first reference time information is used by the second communication device to perform time synchronization with the first communication device, and the first reference time information is determined based on a first synchronization accuracy configuration.

It may be understood that the first synchronization accuracy configuration is a synchronization accuracy configuration used before the first communication device switches the synchronization accuracy configuration used for time synchronization with the second communication device, and a subsequently related second synchronization accuracy configuration is a synchronization accuracy configuration that needs to be used after the synchronization accuracy configuration is switched.

In S600, the first communication device may determine the first reference time information based on the first synchronization accuracy configuration. The first synchronization accuracy configuration may be determined by the first communication device, the second communication device, or a network device based on a running status of the second communication device and/or an available resource status of the first communication device before S600. For a specific process, refer to the process of determining the first synchronization accuracy configuration in Embodiment 1 or Embodiment 2.

Optionally, the first synchronization accuracy configuration may alternatively be specified in a communication protocol, determined by the first communication device or default, set by a user of the first communication device, configured by the network device, or configured by user equipment. This is not limited in this application. For example, when the first communication device establishes a connection to the second communication device, the first communication device may perform time synchronization with the second communication device by using a default first synchronization accuracy configuration or a first synchronization accuracy configuration specified in a communication protocol.

S601: The second communication device performs time synchronization with the first communication device based on the first reference time information.

S602: The second communication device sends a second message to the first communication device in a running process after S601. The first communication device receives the second message from the second communication device. The second message includes a first indication, and the first indication indicates the second synchronization accuracy configuration.

In this embodiment of this application, before performing S602, the second communication device may further determine the second synchronization accuracy configuration in S602a, or obtain the first indication from a network device connected to the second communication device.

S602a: The second communication device determines the second synchronization accuracy configuration.

In S602a, the second communication device may determine a synchronization accuracy configuration meeting a synchronization accuracy requirement of the second communication device.

Optionally, the second communication device may determine the second synchronization accuracy configuration based on first information, where the first information represents the current running status of the second communication device and/or the available resource status of the first communication device.

For a process in which the second communication device determines the second synchronization accuracy configuration and sends the second message, refer to the process in which the second communication device determines the first synchronization accuracy configuration and sends the first message in Embodiment 1. Details are not described herein again.

In an implementation, after determining the second synchronization accuracy configuration, the second communication device may send the second message to the first communication device when determining that the second synchronization accuracy configuration is different from the originally used first synchronization accuracy configuration. If the second synchronization accuracy configuration is the same as the first synchronization accuracy configuration, the second communication device continues to run until a next determined synchronization accuracy configuration is different from the first synchronization accuracy configuration, and then notifies the first communication device of the latest synchronization accuracy configuration.

S603: The first communication device sends a third message to the second communication device. The second communication device receives the third message from the first communication device. The third message includes time offset information. The time offset information indicates a first time offset between a second reference time corresponding to the second synchronization accuracy configuration and a first reference time corresponding to the first synchronization accuracy configuration.

It should be noted that an execution time of S603 is not limited in this embodiment of this application. For example, this step may be performed after S602, may be performed before S600, or may be performed at any time before S604.

Optionally, in S603, after determining the second synchronization accuracy configuration indicated by the first indication, the first communication device may determine the first time offset in, but not limited to, any one of the following manners:
Manner b1: The first communication device uses an offset between the second synchronization accuracy configuration and the first synchronization accuracy configuration as the first time offset.
Manner b2: Second reference time information is determined based on the second synchronization accuracy configuration; and the first time offset is determined based on the second reference time information and the first reference time information.

In an implementation, the time offset information includes a value of the first time offset or an index value of the first time offset. When both the first communication device and the second communication device store a plurality of time offsets and an index value corresponding to each time offset, after obtaining the first time offset based on the second synchronization accuracy configuration, the first communication device may determine the index value of the first time offset, and notify the second communication device of the index value of the first time offset by using the third message.

For example, the first communication device and the second communication device may exchange the plurality of time offsets and the index value of each time offset in advance. Alternatively, the plurality of time offsets and the index value of each time offset in the first communication device and the second communication device are predefined, are set by a user, are specified in a protocol, are configured by a network device, or are configured by user equipment. This is not limited in this application. In conclusion, a specific implementation of how the two communication devices store the plurality of time offsets and the index value of each time offset is not limited in this embodiment of this application.

In an implementation, the third message may further include clock crystal oscillator information or clock crystal oscillator offset information, so that the second communication device may determine more accurate second reference time information based on the first reference time information, the time offset information, and the clock crystal oscillator information or the clock crystal oscillator offset information.

The clock crystal oscillator information includes a clock crystal oscillator periodicity or a clock crystal oscillator frequency corresponding to the first synchronization accuracy configuration (for example, a first clock type), and a clock crystal oscillator periodicity or a clock crystal oscillator frequency corresponding to the second synchronization accuracy configuration (for example, a second clock type). The clock crystal oscillator offset information includes an offset between the clock crystal oscillator periodicity corresponding to the first synchronization accuracy configuration (for example, the first clock type) and the clock crystal oscillator periodicity corresponding to the second synchronization accuracy configuration (for example, the second clock type), and/or an offset between the clock crystal oscillator frequency corresponding to the first synchronization accuracy configuration (for example, the first clock type) and the clock crystal oscillator frequency corresponding to the second synchronization accuracy configuration (for example, the second clock type).

In an implementation, before performing S603, the first communication device and the second communication device may further perform S603a, to notify the second communication device that the first communication device allows time synchronization to be performed by using the second synchronization accuracy configuration.

S603a: This step is an optional step. Before performing S603, the first communication device may further send a fourth message to the second communication device. The second communication device receives the fourth message from the first communication device. The fourth message is used to notify the second communication device that the first communication device allows time synchronization to be performed by using the second synchronization accuracy configuration.

Optionally, when the second message is used to request the first communication device to perform time synchronization by using the second synchronization accuracy configuration, the fourth message may be used as a response message of the second message.

S604: The second communication device may determine the second reference time information based on the first reference time information and the time offset information.

For example, in S604, the second communication device may add or subtract the first time offset indicated by the time offset information to or from the first reference time indicated by the first reference time information, to obtain the second reference time.

When the third message further includes the clock crystal oscillator information or the clock crystal oscillator offset information, before determining the second reference time information, the second communication device corrects the time offset information based on the clock crystal oscillator information or the clock crystal oscillator offset information; or after determining the second reference time information, the second communication device corrects the second reference time information based on the clock crystal oscillator information or the clock crystal oscillator offset information. In this way, more accurate second reference time information can be obtained.

S605: The second communication device performs time synchronization with the first communication device based on the second reference time information.

In this embodiment of this application, the second communication device performs time synchronization with the first communication device based on the first reference time information or the second reference time information. For a specific process, refer to the time synchronization process in the conventional technology. Details are not described in this application.

In conclusion, this embodiment of this application provides the time synchronization method. In the method, the second communication device may indicate a synchronization accuracy configuration to the first communication device for time synchronization. In this way, as a time-receiving device, the second communication device may determine a more proper synchronization accuracy configuration meeting a synchronization accuracy requirement of the second communication device, to ensure a TSN/TSC feature of a system. Further, the second communication device may determine a synchronization accuracy configuration in real time based on the running status of the second communication device and/or the available resource status of the first communication device, so that the synchronization accuracy configuration indicated by the second communication device to the first communication device meets the running status of the first communication device, and an available resource of the first communication device can support time synchronization using the synchronization accuracy configuration. In conclusion, according to the method, a time-providing device may perform time synchronization by using the synchronization accuracy configuration meeting the synchronization accuracy requirement of the time-receiving device, to finally improve reliability of supporting TSN/TSC between the time-providing device and the time-receiving device.

In addition, in the method, when switching to a new synchronization accuracy configuration, the first communication device may send time offset information to the second communication device, so that the second communication device may determine, based on the time offset information and reference time information corresponding to an old synchronization accuracy configuration, reference time information corresponding to the new synchronization accuracy configuration, to perform time synchronization with the first communication device. The time offset information indicates a time offset between a reference time corresponding to the new synchronization accuracy configuration and a reference time corresponding to the old synchronization accuracy configuration. Compared with the reference time information, the time offset information includes a smaller data amount. Therefore, according to the method, signaling overheads between the first communication device and the second communication device can be reduced, and processing complexity on a first communication device side can also be reduced. In a scenario in which the first communication device needs to perform time synchronization with a plurality of second communication devices, processing complexity and signaling overheads of the first communication device can be significantly reduced.

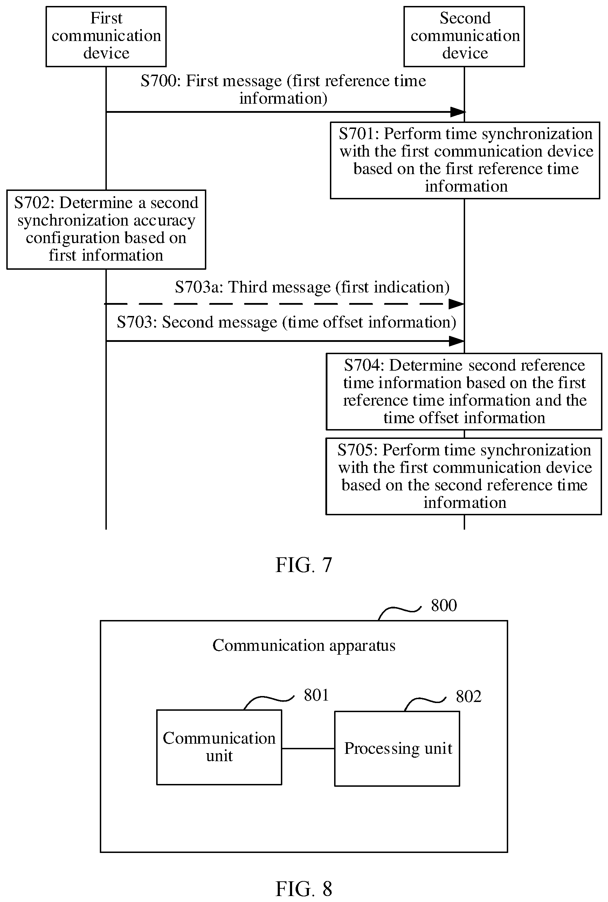

Embodiment 4: FIG. 7 is a flowchart of a time synchronization method according to an embodiment of this application. With reference to FIG. 7, the following specifically describes the method provided in Embodiment 4.

S700: A first communication device sends a first message to a second communication device. The second communication device receives the first message from the first communication device. The first message includes first reference time information. The first reference time information is used by the second communication device to perform time synchronization with the first communication device, and the first reference time information is determined based on a first synchronization accuracy configuration.

S701: The second communication device performs time synchronization with the first communication device based on the first reference time information.

S700 and S701 in this embodiment are the same as S600 and S601 in Embodiment 3. For same parts, refer to each other. Details are not described herein again.

S702: The first communication device determines a second synchronization accuracy configuration based on first information in a running process after S701. The first information is used for a running status of the second communication device and/or an available resource status of the first communication device.

In this embodiment of this application, for a process in which the first communication device determines the second synchronization accuracy configuration based on the first information, refer to the process in which the first communication device determines the first synchronization accuracy configuration in S500 in Embodiment 2. Details are not described herein again.

S703: The first communication device sends a second message to the second communication device. The second communication device receives the second message from the first communication device. The second message includes time offset information. The time offset information indicates a first time offset between a second reference time corresponding to the second synchronization accuracy configuration and a first reference time corresponding to the first synchronization accuracy configuration.

Optionally, in S703, after determining the second synchronization accuracy configuration in S702, the first communication device may determine the first time offset in, but not limited to, Manner b1 or Manner b2 in S603 in Embodiment 3.

In this embodiment of this application, same as the time offset information in Embodiment 3, in this embodiment, the time offset information includes a value of the first time offset or an index value of the first time offset. For details, refer to the corresponding descriptions in Embodiment 3. Details are not described herein again.

In an implementation, the second message may further include clock crystal oscillator information or clock crystal oscillator offset information, so that the second communication device may determine more accurate second reference time information based on the first reference time information, the time offset information, and the clock crystal oscillator information or the clock crystal oscillator offset information. For descriptions of the clock crystal oscillator information or the clock crystal oscillator offset information, refer to the corresponding descriptions in Embodiment 3. Details are not described herein again.

Optionally, before performing S703, the first communication device and the second communication device may further perform S703a, to notify the second communication device that the first communication device performs time synchronization by using the second synchronization accuracy configuration (or the first communication device switches a synchronization accuracy configuration to the second synchronization accuracy configuration).

S703a: This step is an optional step. Before performing S703, the first communication device may further send a third message to the second communication device. The second communication device receives the third message from the first communication device. The third message is used to notify the second communication device that the first communication device performs time synchronization by using the second synchronization accuracy configuration (or the first communication device switches a synchronization accuracy configuration to the second synchronization accuracy configuration).

Optionally, the third message may include a first indication, and the first indication indicates the second synchronization accuracy configuration. For a specific implementation of the first indication, refer to the descriptions (including Manner 1 to Manner 3) of the first indication in Embodiment 1. Details are not described herein again.

It should be noted that an execution time of S703 is not limited in this embodiment of this application. For example, this step may be performed after S702, may be performed before S700, or may be performed at any time before S704.

S704: The second communication device may determine second reference time information based on the first reference time information and the time offset information.

Optionally, when S703 is not performed after S702, after receiving the third message in S703a, the second communication device may determine the second synchronization accuracy configuration based on the first indication in the third message, then determine the time offset information, and finally perform S704.

S705: The second communication device performs time synchronization with the first communication device based on the second reference time information.

S704 and S705 in this embodiment are the same as S604 and S605 in Embodiment 3. For same steps, refer to each other. Details are not described herein again.

In conclusion, this embodiment of this application provides the time synchronization method. In the method, the first communication device may determine a synchronization accuracy configuration based on the running status of the second communication device and/or the available resource status of the first communication device, to perform time synchronization with the second communication device. In this way, as a time-providing device, the first communication device may determine a synchronization accuracy configuration that meets the running status of the second communication device and that can be supported by an available resource of the first communication device. In other words, the first communication device may determine a more proper synchronization accuracy configuration meeting a synchronization accuracy requirement of the second communication device, to ensure a TSN/TSC feature of a system. In conclusion, according to the method, the time-providing device may perform time synchronization by using the synchronization accuracy configuration meeting the synchronization accuracy requirement of a time-receiving device, to finally improve reliability of supporting TSN/TSC between the time-providing device and the time-receiving device.

In addition, in the method, when switching to a new synchronization accuracy configuration, the first communication device may send time offset information to the second communication device, so that the second communication device may determine, based on the time offset information and reference time information corresponding to an old synchronization accuracy configuration, reference time information corresponding to the new synchronization accuracy configuration, to perform time synchronization with the first communication device. The time offset information indicates a time offset between a reference time corresponding to the new synchronization accuracy configuration and a reference time corresponding to the old synchronization accuracy configuration. Compared with the reference time information, the time offset information includes a smaller data amount. Therefore, according to the method, signaling overheads between the first communication device and the second communication device can be reduced, and processing complexity on a first communication device side can also be reduced. In a scenario in which the first communication device needs to perform time synchronization with a plurality of second communication devices, processing complexity and signaling overheads of the first communication device can be significantly reduced.

It should be further noted that each step in the foregoing embodiments or instances may be performed by a corresponding device, or may be performed by a component such as a chip, a processor, or a chip system in the device. This is not limited in embodiments of this application. The foregoing embodiments are described only by using an example in which each step is performed by the corresponding device. In addition, specific implementations or examples in the foregoing embodiments constitute no limitation on the solutions provided in embodiments of this application.

It should be noted that in the foregoing embodiments, a part of steps may be selected for implementation, or a sequence of steps in the figure may be adjusted for implementation. This is not limited in this application. It should be understood that performing a part of steps in the figure, adjusting a sequence of steps, or combining the two manners for specific implementation shall fall within the protection scope of this application.

It may be understood that, to implement functions in the foregoing embodiments, devices in the foregoing embodiments include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

It may be understood that, the network architecture and the application scenarios described in embodiments of this application are intended to describe the technical solutions in embodiments of the present invention more clearly, but do not constitute a limitation on the technical solutions provided in embodiments of the present invention. A person of ordinary skill in the art may be aware that, with evolution of the network architecture and emergence of a new service, the technical solutions provided in embodiments of the present invention are also applicable to a similar technical problem.

It should be noted that the "step" in embodiments of this application is merely an example, is a representation method used to better understand embodiments, and does not constitute a substantive limitation on execution of the solutions in this application. For example, the "step" may also be understood as a "feature". In addition, the step does not constitute any limitation on an execution sequence of the solutions in this application, and a new technical solution formed through an operation, for example, step sequence change, step combination, or step splitting, performed on this basis without affecting implementation of the overall solutions also falls within the scope disclosed in this application.

Based on a same technical concept, this application further provides a communication apparatus. The communication apparatus may be used in the mobile communication system shown in FIG. 3. The communication apparatus is configured to implement the method provided in the foregoing embodiments. The communication apparatus may be used in the first communication device or the second communication device in the foregoing embodiments. With reference to FIG. 8, a communication apparatus 800 includes a communication unit 801 and a processing unit 802.

The communication unit 801 is configured to: receive and send data, and support the communication apparatus 800 in communicating with another device.

The processing unit 802 is configured to control and manage an action of the communication apparatus 800, and perform the steps performed by the network device or the terminal device in the communication method provided in the foregoing embodiments or instances.

Optionally, the communication apparatus 800 further includes a storage unit, configured to store program code and/or data of the communication apparatus 800.

The communication unit 801 may be referred to as an input/output unit, a transceiver unit, or the like. The communication unit 801 may be a transceiver or a communication interface. The processing unit 802 may be a processor. When the communication apparatus 800 is a module (for example, a chip) in a communication device, the communication unit 801 may be an input/output interface, an input/output circuit, an input/output pin, or the like, and may also be referred to as an interface, a communication interface, an interface circuit, or the like; and the processing unit 802 may be a processor, a processing circuit, a logic circuit, or the like.

In an implementation, the communication apparatus 800 may be used in the first communication device in Embodiment 1 shown in FIG. 4. The processing unit 802 is configured to:
receive a first message from a second communication device through the communication unit 801, where the first message includes a first indication, and the first indication indicates a first synchronization accuracy configuration; and
send a second message to the second communication device through the communication unit 801, where the second message includes first reference time information, the first reference time information is used by the second communication device to perform time synchronization with the first communication device, and the first reference time information is determined based on the first synchronization accuracy configuration.

Optionally, the first synchronization accuracy configuration includes at least one of the following: a first clock type and a first synchronization accuracy requirement; and
the first indication is an index value of the first synchronization accuracy configuration; or
the first indication includes a time information type information element, where the time information type information element indicates the first clock type; or
the first indication includes an uncertainty information element, where the uncertainty information element indicates the first synchronization accuracy requirement.

Optionally, the first reference time information includes location information of a first reference time corresponding to the first synchronization accuracy configuration, or an index value of the first reference time.

Optionally, the first message is used to request the first communication device to perform time synchronization by using the first synchronization accuracy configuration; and the processing unit 802 is further configured to:
send a third message to the second communication device through the communication unit 801, where the third message is used to notify the second communication device that the first communication device allows time synchronization to be performed by using the first synchronization accuracy configuration.

Optionally, the first communication device is a network device, and the second communication device is a terminal device; or the first communication device is a first terminal device, and the second communication device is a second terminal device.

In an implementation, the communication apparatus 800 may be used in the second communication device in Embodiment 1 shown in FIG. 4. The processing unit 802 is configured to:
send a first message to a first communication device through the communication unit 801, where the first message includes a first indication, and the first indication indicates a first synchronization accuracy configuration;
receive a second message from the first communication device through the communication unit 801, where the second message includes first reference time information, and the first reference time information is determined based on the first synchronization accuracy configuration; and
perform time synchronization with the first communication device based on the first reference time information.

Optionally, the processing unit 802 is further configured to:
determine the first synchronization accuracy configuration based on first information, where the first information represents a running status of the second communication device and/or an available resource status of the first communication device.

Optionally, the first information includes at least one of the following: available resource information of the first communication device, available resource information of the second communication device, location information of the second communication device, and service information of the second communication device.

Optionally, the location information of the first communication device includes at least one of the following: latitude and longitude information of the second communication device, cell information of a serving cell of the second communication device, and information about a zone in which the second communication device is located; and
the service information of the second communication device includes a service type or information about a quality of service QoS flow.

Optionally, when the first information includes the service information of the second communication device, and there are a plurality of pieces of service information of the second communication device, when determining the first synchronization accuracy configuration based on the first information, the processing unit 802 is specifically configured to:
determine, based on each of the plurality of pieces of service information, a synchronization accuracy configuration corresponding to each piece of service information; and select, from synchronization accuracy configurations corresponding to the plurality of pieces of service information, a synchronization accuracy configuration with highest synchronization accuracy as the first synchronization accuracy configuration; or
select target service information from the plurality of pieces of service information; and use a synchronization accuracy configuration corresponding to the target service information as the first synchronization accuracy configuration.

Optionally, in the plurality of pieces of service information, the target service information has a highest priority, or the target service information has a lowest delay requirement, or the target service information has a highest synchronization accuracy requirement.

Optionally, the first synchronization accuracy configuration includes at least one of the following: a first clock type and a first synchronization accuracy requirement; and
the first indication is an index value of the first synchronization accuracy configuration; or
the first indication includes a time information type information element, where the time information type information element indicates the first clock type; or
the first indication includes an uncertainty information element, where the uncertainty information element indicates the first synchronization accuracy requirement.

Optionally, the first reference time information includes location information of a first reference time corresponding to the first synchronization accuracy configuration, or an index value of the first reference time.

Optionally, the first message is used to request the first communication device to perform time synchronization by using the first synchronization accuracy configuration; and the processing unit 802 is further configured to:
receive a third message from the first communication device through the communication unit 801, where the third message is used to notify the second communication device that the first communication device allows time synchronization to be performed by using the first synchronization accuracy configuration.

Optionally, the first communication device is a network device, and the second communication device is a terminal device; or the first communication device is a first terminal device, and the second communication device is a second terminal device.

In an implementation, the communication apparatus 800 may be used in the first communication device in Embodiment 2 shown in FIG. 5. The processing unit 802 is configured to:
determine a first synchronization accuracy configuration based on first information, where the first information represents a running status of a second communication device and/or an available resource status of the first communication device; and
send a first message to the second communication device through the communication unit 801, where the first message includes first reference time information, the first reference time information is used by the second communication device to perform time synchronization with the first communication device, and the first reference time information is determined based on the first synchronization accuracy configuration.

Optionally, the first information includes at least one of the following: available resource information of the first communication device, available resource information of the second communication device, location information of the second communication device, and service information of the second communication device.

Optionally, the location information of the first communication device includes at least one of the following: latitude and longitude information of the second communication device, cell information of a serving cell of the second communication device, and information about a zone in which the second communication device is located; and
the service information of the second communication device includes a service type or information about a quality of service QoS flow.

Optionally, when the first information includes the service information of the second communication device, and there are a plurality of pieces of service information of the second communication device, when determining the first synchronization accuracy configuration based on the first information, the processing unit 802 is specifically configured to:
determine, based on each of the plurality of pieces of service information, a synchronization accuracy configuration corresponding to each piece of service information; and select, from synchronization accuracy configurations corresponding to the plurality of pieces of service information, a synchronization accuracy configuration with highest synchronization accuracy as the first synchronization accuracy configuration; or
select target service information from the plurality of pieces of service information; and use a synchronization accuracy configuration corresponding to the target service information as the first synchronization accuracy configuration.

Optionally, in the plurality of pieces of service information, the target service information has a highest priority, or the target service information has a lowest delay requirement, or the target service information has a highest synchronization accuracy requirement.

Optionally, the first reference time information includes location information of a first reference time corresponding to the first synchronization accuracy configuration, or an index value of the first reference time.

Optionally, the processing unit 802 is further configured to:
send a second message to the second communication device through the communication unit 801, where the second message includes a first indication, the first indication indicates the first synchronization accuracy configuration, and the second message is used to notify the second communication device that the first communication device performs time synchronization by using the first synchronization accuracy configuration.

Optionally, the first synchronization accuracy configuration includes at least one of the following: a first clock type and a first synchronization accuracy requirement; and
the first indication is an index value of the first synchronization accuracy configuration; or
the first indication includes a time information type information element, where the time information type information element indicates the first clock type; or
the first indication includes an uncertainty information element, where the uncertainty information element indicates the first synchronization accuracy requirement.

Optionally, the first communication device is a network device, and the second communication device is a terminal device; or the first communication device is a first terminal device, and the second communication device is a second terminal device.

In an implementation, the communication apparatus 800 may be used in the first communication device in Embodiment 3 shown in FIG. 6. The processing unit 802 is configured to:
send a first message to a second communication device through the communication unit 801, where the first message includes first reference time information, the first reference time information is used by the second communication device to perform time synchronization with the first communication device, and the first reference time information is determined based on a first synchronization accuracy configuration;
receive a second message from the second communication device through the communication unit 801, where the second message includes a first indication, and the first indication indicates a second synchronization accuracy configuration; and
send a third message to the second communication device through the communication unit 801, where the third message includes time offset information, and the time offset information indicates a first time offset between a second reference time corresponding to the second synchronization accuracy configuration and a first reference time corresponding to the first synchronization accuracy configuration.

Optionally, the second synchronization accuracy configuration includes at least one of the following: a second clock type and a second synchronization accuracy requirement; and
the first indication is an index value of the second synchronization accuracy configuration; or
the first indication includes a time information type information element, where the time information type information element indicates the second clock type; or
the first indication includes an uncertainty information element, where the uncertainty information element indicates the second synchronization accuracy requirement.

Optionally, the time offset information includes a value of the first time offset or an index value of the first time offset.

Optionally, the processing unit 802 is further configured to:
use an offset between the second synchronization accuracy configuration and the first synchronization accuracy configuration as the first time offset; or
determine second reference time information based on the second synchronization accuracy configuration; and determine the first time offset based on the second reference time information and the first reference time information.

Optionally, the third message further includes clock crystal oscillator information or clock crystal oscillator offset information.

The clock crystal oscillator information includes a clock crystal oscillator periodicity or a clock crystal oscillator frequency corresponding to the first synchronization accuracy configuration, and a clock crystal oscillator periodicity or a clock crystal oscillator frequency corresponding to the second synchronization accuracy configuration.

The clock crystal oscillator offset information includes an offset between the clock crystal oscillator periodicity corresponding to the first synchronization accuracy configuration and the clock crystal oscillator periodicity corresponding to the second synchronization accuracy configuration, and/or an offset between the clock crystal oscillator frequency corresponding to the first synchronization accuracy configuration and the clock crystal oscillator frequency corresponding to the second synchronization accuracy configuration.

Optionally, the second message is used to request the first communication device to perform time synchronization by using the second synchronization accuracy configuration; and the processing unit 802 is further configured to:
send a fourth message to the second communication device, where the fourth message is used to notify the second communication device that the first communication device allows time synchronization to be performed by using the second synchronization accuracy configuration.

Optionally, the first communication device is a network device, and the second communication device is a terminal device; or the first communication device is a first terminal device, and the second communication device is a second terminal device.

In an implementation, the communication apparatus 800 may be used in the second communication device in Embodiment 3 shown in FIG. 6. The processing unit 802 is configured to:
receive a first message from a first communication device through the communication unit 801, where the first message includes first reference time information; and the first reference time information is determined based on a first synchronization accuracy configuration;
perform time synchronization with the first communication device based on the first reference time information;
send a second message to the first communication device through the communication unit 801, where the second message includes a first indication, and the first indication indicates a second synchronization accuracy configuration;
receive a third message from the first communication device through the communication unit 801, where the third message includes time offset information, and the time offset information indicates a first time offset between a second reference time corresponding to the second synchronization accuracy configuration and a first reference time corresponding to the first synchronization accuracy configuration;
determine second reference time information based on the first reference time information and the time offset information; and
perform time synchronization with the first communication device based on the second reference time information.

Optionally, the processing unit 802 is further configured to:
determine the second synchronization accuracy configuration based on first information, where the first information represents a running status of the second communication device and/or an available resource status of the first communication device.

Optionally, the first information includes at least one of the following: available resource information of the first communication device, available resource information of the second communication device, location information of the second communication device, and service information of the second communication device.

Optionally, the location information of the second communication device includes at least one of the following: latitude and longitude information of the second communication device, cell information of a serving cell of the second communication device, and information about a zone in which the second communication device is located; and
the service information of the second communication device includes a service type or information about a quality of service QoS flow.

Optionally, when the first information includes the service information of the second communication device, and there are a plurality of pieces of service information of the second communication device, when determining the second synchronization accuracy configuration based on the first information, the processing unit 802 is specifically configured to:
determine, based on each of the plurality of pieces of service information, a synchronization accuracy configuration corresponding to each piece of service information; and select, from synchronization accuracy configurations corresponding to the plurality of pieces of service information, a synchronization accuracy configuration with highest synchronization accuracy as the second synchronization accuracy configuration; or
select target service information from the plurality of pieces of service information; and use a synchronization accuracy configuration corresponding to the target service information as the second synchronization accuracy configuration.

Optionally, in the plurality of pieces of service information, the target service information has a highest priority, or the target service information has a lowest delay requirement, or the target service information has a highest synchronization accuracy requirement.

Optionally, the second synchronization accuracy configuration includes at least one of the following: a second clock type and a second synchronization accuracy requirement; and
the first indication is an index value of the second synchronization accuracy configuration; or
the first indication includes a time information type information element, where the time information type information element indicates the second clock type; or
the first indication includes an uncertainty information element, where the uncertainty information element indicates the second synchronization accuracy requirement.

Optionally, the time offset information includes a value of the first time offset or an index value of the first time offset.

Optionally, the third message further includes clock crystal oscillator information or clock crystal oscillator offset information.

The clock crystal oscillator information includes a clock crystal oscillator periodicity or a clock crystal oscillator frequency corresponding to the first synchronization accuracy configuration, and a clock crystal oscillator periodicity or a clock crystal oscillator frequency corresponding to the second synchronization accuracy configuration.

The clock crystal oscillator offset information includes an offset between the clock crystal oscillator periodicity corresponding to the first synchronization accuracy configuration and the clock crystal oscillator periodicity corresponding to the second synchronization accuracy configuration, and/or an offset between the clock crystal oscillator frequency corresponding to the first synchronization accuracy configuration and the clock crystal oscillator frequency corresponding to the second synchronization accuracy configuration.

The processing unit 802 is further configured to:
correct the second reference time information based on the clock crystal oscillator information or the clock crystal oscillator offset information; or
correct the time offset information based on the clock crystal oscillator information or the clock crystal oscillator offset information.

Optionally, the second message is used to request the first communication device to perform time synchronization by using the second synchronization accuracy configuration; and the processing unit 802 is further configured to:
receive a fourth message from the first communication device through the communication unit 801, where the fourth message is used to notify the second communication device that the first communication device allows time synchronization to be performed by using the second synchronization accuracy configuration.

Optionally, the first communication device is a network device, and the second communication device is a terminal device; or the first communication device is a first terminal device, and the second communication device is a second terminal device.

In an implementation, the communication apparatus 800 may be used in the first communication device in Embodiment 4 shown in FIG. 7. The processing unit 802 is configured to:
send a first message to a second communication device through the communication unit 801, where the first message includes first reference time information, and the first reference time information is determined based on a first synchronization accuracy configuration;
determine a second synchronization accuracy configuration based on first information, where the first information represents a running status of the second communication device and/or an available resource status of the first communication device; and
send a second message to the second communication device through the communication unit 801, where the second message includes time offset information, and the time offset information indicates a first time offset between a second reference time corresponding to the second synchronization accuracy configuration and a first reference time corresponding to the first synchronization accuracy configuration.

Optionally, the first information includes at least one of the following: available resource information of the first communication device, available resource information of the second communication device, location information of the second communication device, and service information of the second communication device.

Optionally, the location information of the second communication device includes at least one of the following: latitude and longitude information of the second communication device, cell information of a serving cell of the second communication device, and information about a zone in which the second communication device is located; and
the service information of the second communication device includes a service type or information about a quality of service QoS flow.

Optionally, when the first information includes the service information of the second communication device, and there are a plurality of pieces of service information of the second communication device, when determining the second synchronization accuracy configuration based on the first information, the processing unit 802 is specifically configured to:
determine, based on each of the plurality of pieces of service information, a synchronization accuracy configuration corresponding to each piece of service information; and select, from synchronization accuracy configurations corresponding to the plurality of pieces of service information, a synchronization accuracy configuration with highest synchronization accuracy as the second synchronization accuracy configuration; or
select target service information from the plurality of pieces of service information; and use a synchronization accuracy configuration corresponding to the target service information as the second synchronization accuracy configuration.

Optionally, in the plurality of pieces of service information, the target service information has a highest priority, or the target service information has a lowest delay requirement, or the target service information has a highest synchronization accuracy requirement.

Optionally, the time offset information includes a value of the first time offset or an index value of the first time offset.

Optionally, the processing unit 802 is further configured to:
use an offset between the second synchronization accuracy configuration and the first synchronization accuracy configuration as the first time offset; or
determine second reference time information based on the second synchronization accuracy configuration; and determine the first time offset based on the second reference time information and the first reference time information.

Optionally, the second message further includes clock crystal oscillator information or clock crystal oscillator offset information.

The clock crystal oscillator information includes a clock crystal oscillator periodicity or a clock crystal oscillator frequency corresponding to the first synchronization accuracy configuration, and a clock crystal oscillator periodicity or a clock crystal oscillator frequency corresponding to the second synchronization accuracy configuration.

The clock crystal oscillator offset information includes an offset between the clock crystal oscillator periodicity corresponding to the first synchronization accuracy configuration and the clock crystal oscillator periodicity corresponding to the second synchronization accuracy configuration, and/or an offset between the clock crystal oscillator frequency corresponding to the first synchronization accuracy configuration and the clock crystal oscillator frequency corresponding to the second synchronization accuracy configuration.

Optionally, the processing unit 802 is further configured to:
send a third message to the second communication device through the communication unit 801, where the third message includes a first indication, the first indication indicates the second synchronization accuracy configuration, and the third message is used to notify the second communication device that the first communication device performs time synchronization by using the second synchronization accuracy configuration.

Optionally, the second synchronization accuracy configuration includes at least one of the following: a second clock type and a second synchronization accuracy requirement; and
the first indication is an index value of the second synchronization accuracy configuration; or
the first indication includes a time information type information element, where the time information type information element indicates the second clock type; or
the first indication includes an uncertainty information element, where the uncertainty information element indicates the second synchronization accuracy requirement.

Optionally, the first communication device is a network device, and the second communication device is a terminal device; or the first communication device is a first terminal device, and the second communication device is a second terminal device.

In an implementation, the communication apparatus 800 may be used in the second communication device in Embodiment 4 shown in FIG. 7. The processing unit 802 is configured to:
receive a first message from a first communication device through the communication unit 801, where the first message includes first reference time information, and the first reference time information is determined based on a first synchronization accuracy configuration;
perform time synchronization with the first communication device based on the first reference time information;
receive a second message from the first communication device through the communication unit 801, where the second message includes time offset information, and the time offset information indicates a first time offset between a second reference time corresponding to a second synchronization accuracy configuration and a first reference time corresponding to the first synchronization accuracy configuration;
determine second reference time information based on the first reference time information and the time offset information; and
perform time synchronization with the first communication device based on the first reference time information.

Optionally, the time offset information includes a value of the first time offset or an index value of the first time offset.

Optionally, the second message further includes clock crystal oscillator information or clock crystal oscillator offset information.

The clock crystal oscillator information includes a clock crystal oscillator periodicity or a clock crystal oscillator frequency corresponding to the first synchronization accuracy configuration, and a clock crystal oscillator periodicity or a clock crystal oscillator frequency corresponding to the second synchronization accuracy configuration.

The clock crystal oscillator offset information includes an offset between the clock crystal oscillator periodicity corresponding to the first synchronization accuracy configuration and the clock crystal oscillator periodicity corresponding to the second synchronization accuracy configuration, and/or an offset between the clock crystal oscillator frequency corresponding to the first synchronization accuracy configuration and the clock crystal oscillator frequency corresponding to the second synchronization accuracy configuration.

The processing unit 802 is further configured to:
correct the second reference time information based on the clock crystal oscillator information or the clock crystal oscillator offset information; or
correct the time offset information based on the clock crystal oscillator information or the clock crystal oscillator offset information.

Optionally, the processing unit 802 is further configured to:
receive a third message from the first communication device through the communication unit 801, where the third message includes a first indication, the first indication indicates the second synchronization accuracy configuration, and the third message is used to notify the second communication device that the first communication device performs time synchronization by using the second synchronization accuracy configuration.

Optionally, the second synchronization accuracy configuration includes at least one of the following: a second clock type and a second synchronization accuracy requirement; and
the first indication is an index value of the second synchronization accuracy configuration; or
the first indication includes a time information type information element, where the time information type information element indicates the second clock type; or
the first indication includes an uncertainty information element, where the uncertainty information element indicates the second synchronization accuracy requirement.

Optionally, the first communication device is a network device, and the second communication device is a terminal device; or the first communication device is a first terminal device, and the second communication device is a second terminal device.

It should be noted that division into the modules in embodiments of this application is an example, and is merely logical function division. In actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, or a network device) or a processor (processor) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

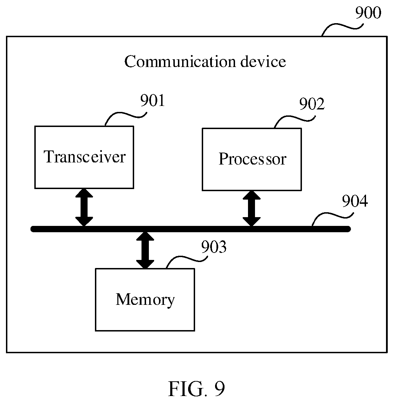

Based on the foregoing embodiments, an embodiment of this application further provides a communication device. The communication device may be the first communication device or the second communication device in the communication system shown in FIG. 3. The communication device can implement the methods in the foregoing embodiments, and has a function of the communication apparatus 800. With reference to FIG. 9, a communication device 900 includes a transceiver 901, a processor 902, and a memory 903. The transceiver 901, the processor 902, and the memory 903 are connected to each other.

Optionally, the transceiver 901, the processor 902, and the memory 903 are connected to each other through a bus 904. The bus 904 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 9, but this does not mean that there is only one bus or only one type of bus.

The transceiver 901 is configured to: receive and send signals, to implement communication with another device.

For a function of the processor 902, refer to the descriptions in the foregoing embodiments. Details are not described herein again.

The processor 902 may be a central processing unit (central processing unit, CPU), a network processor (network processor, NP), a combination of the CPU and the NP, or the like. The processor 902 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. The processor 902 may implement the foregoing functions by hardware or by hardware executing corresponding software. The steps in the methods disclosed with reference to embodiments of this application may be directly performed and completed by the processor 902, or may be performed and completed by a combination of hardware and software modules in the processor 902.

The memory 903 is configured to store program instructions, data, and the like. Specifically, the program instructions may include program code. The program code includes computer operation instructions. The memory 903 may include a volatile memory (volatile memory), for example, a random access memory (random access memory, RAM), or may include a non-volatile memory (non-volatile memory), for example, at least one magnetic disk memory, a hard disk drive (hard disk drive, HDD), or a solid-state drive (solid-state drive, SSD). Alternatively, the memory 903 may be any other medium that can be configured to carry or store program code in a form of instructions or a data structure and that can be accessed by a computer. This is not limited in this application. The processor 902 executes the program instructions stored in the memory 903, to implement the foregoing functions, so as to implement the methods provided in the foregoing embodiments.

Based on the foregoing embodiments, an embodiment of this application further provides a communication system. The communication system includes a first communication device and a second communication device. The first communication device is configured to implement the steps performed by the first communication device in the method provided in the foregoing embodiments, and the second communication device is configured to implement the steps performed by the second communication device in the methods provided in the foregoing embodiments.

Based on the foregoing embodiments, an embodiment of this application further provides a computer program product. The computer program product includes a computer program. When the computer program is run on a computer, the computer is enabled to perform the methods provided in the foregoing embodiments.

Based on the foregoing embodiments, an embodiment of this application further provides a computer-readable storage medium. The computer-readable storage medium stores a computer program, and when the computer program is executed by a computer, the computer is enabled to perform the methods provided in the foregoing embodiments.

Optionally, the computer may include but is not limited to a communication device.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of instructions or a data structure and can be accessed by a computer.

Based on the foregoing embodiments, an embodiment of this application further provides a chip. The chip is configured to read a computer program stored in a memory, to implement the methods provided in the foregoing embodiments. Optionally, the chip may include a processor. The processor is coupled to the memory, and is configured to read the computer program stored in the memory, to implement the methods provided in the foregoing embodiments. Optionally, the chip may further include components such as the memory, a communication interface, and a power supply module. The memory is configured to store the computer program, the communication interface is configured to receive and send data, and the power supply unit is configured to supply power to the processor.

Based on the foregoing embodiments, an embodiment of this application provides a chip system. The chip system includes a processor, configured to support a computer apparatus in implementing a function related to the terminal device in the foregoing embodiments. In a possible design, the chip system further includes a memory, and the memory is configured to store a program and data that are necessary for the computer apparatus. The chip system may include a chip, or may include a chip and another discrete device.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A time synchronization method, applied to a first communication device, and comprising:
receiving a first message from a second communication device, wherein the first message comprises a first indication, and the first indication indicates a first synchronization accuracy configuration; and
sending a second message to the second communication device, wherein the second message comprises first reference time information, the first reference time information is used by the second communication device to perform time synchronization with the first communication device, and the first reference time information is determined based on the first synchronization accuracy configuration.

2. The method according to claim 1, wherein the first synchronization accuracy configuration comprises at least one of the following: a first clock type and a first synchronization accuracy requirement; and
the first indication is an index value of the first synchronization accuracy configuration; or
the first indication comprises a time information type information element, wherein the time information type information element indicates the first clock type; or
the first indication comprises an uncertainty information element, wherein the uncertainty information element indicates the first synchronization accuracy requirement.

3. The method according to claim 1 or 2, wherein the first reference time information comprises location information of a first reference time corresponding to the first synchronization accuracy configuration, or an index value of the first reference time.

4. The method according to any one of claims 1 to 3, wherein the first message is used to request the first communication device to perform time synchronization by using the first synchronization accuracy configuration; and
the method further comprises:
sending a third message to the second communication device, wherein the third message is used to notify the second communication device that the first communication device allows time synchronization to be performed by using the first synchronization accuracy configuration.

5. The method according to any one of claims 1 to 4, wherein the first communication device is a network device, and the second communication device is a terminal device; or the first communication device is a first terminal device, and the second communication device is a second terminal device.

6. A time synchronization method, applied to a second communication device, and comprising:
sending a first message to a first communication device, wherein the first message comprises a first indication, and the first indication indicates a first synchronization accuracy configuration;
receiving a second message from the first communication device, wherein the second message comprises first reference time information, and the first reference time information is determined based on the first synchronization accuracy configuration; and
performing time synchronization with the first communication device based on the first reference time information.

7. The method according to claim 6, wherein the method further comprises:
determining the first synchronization accuracy configuration based on first information, wherein the first information represents a running status of the second communication device and/or an available resource status of the first communication device.

8. The method according to claim 7, wherein the first information comprises at least one of the following: available resource information of the first communication device, available resource information of the second communication device, location information of the second communication device, and service information of the second communication device.

9. The method according to claim 8, wherein the location information of the first communication device comprises at least one of the following: latitude and longitude information of the second communication device, cell information of a serving cell of the second communication device, and information about a zone in which the second communication device is located; and
the service information of the second communication device comprises a service type or information about a quality of service QoS flow.

10. The method according to claim 9, wherein when the first information comprises the service information of the second communication device, and there are a plurality of pieces of service information of the second communication device, determining the first synchronization accuracy configuration based on the first information comprises:
determining, based on each of the plurality of pieces of service information, a synchronization accuracy configuration corresponding to each piece of service information; and selecting, from synchronization accuracy configurations corresponding to the plurality of pieces of service information, a synchronization accuracy configuration with highest synchronization accuracy as the first synchronization accuracy configuration; or
selecting target service information from the plurality of pieces of service information; and using a synchronization accuracy configuration corresponding to the target service information as the first synchronization accuracy configuration.

11. The method according to claim 10, wherein in the plurality of pieces of service information, the target service information has a highest priority, or the target service information has a lowest delay requirement, or the target service information has a highest synchronization accuracy requirement.

12. The method according to any one of claims 6 to 11, wherein the first synchronization accuracy configuration comprises at least one of the following: a first clock type and a first synchronization accuracy requirement; and
the first indication is an index value of the first synchronization accuracy configuration; or
the first indication comprises a time information type information element, wherein the time information type information element indicates the first clock type; or
the first indication comprises an uncertainty information element, wherein the uncertainty information element indicates the first synchronization accuracy requirement.

13. The method according to any one of claims 6 to 12, wherein the first reference time information comprises location information of a first reference time corresponding to the first synchronization accuracy configuration, or an index value of the first reference time.

14. The method according to any one of claims 6 to 13, wherein the first message is used to request the first communication device to perform time synchronization by using the first synchronization accuracy configuration; and
the method further comprises:
receiving a third message from the first communication device, wherein the third message is used to notify the second communication device that the first communication device allows time synchronization to be performed by using the first synchronization accuracy configuration.

15. The method according to any one of claims 6 to 14, wherein the first communication device is a network device, and the second communication device is a terminal device; or the first communication device is a first terminal device, and the second communication device is a second terminal device.

16. A time synchronization method, applied to a first communication device, and comprising:
determining a first synchronization accuracy configuration based on first information, wherein the first information represents a running status of a second communication device and/or an available resource status of the first communication device; and
sending a first message to the second communication device, wherein the first message comprises first reference time information, the first reference time information is used by the second communication device to perform time synchronization with the first communication device, and the first reference time information is determined based on the first synchronization accuracy configuration.

17. The method according to claim 16, wherein the first information comprises at least one of the following: available resource information of the first communication device, available resource information of the second communication device, location information of the second communication device, and service information of the second communication device.

18. The method according to claim 17, wherein the location information of the first communication device comprises at least one of the following: latitude and longitude information of the second communication device, cell information of a serving cell of the second communication device, and information about a zone in which the second communication device is located; and
the service information of the second communication device comprises a service type or information about a quality of service QoS flow.

19. The method according to claim 18, wherein when the first information comprises the service information of the second communication device, and there are a plurality of pieces of service information of the second communication device, determining the first synchronization accuracy configuration based on the first information comprises:
determining, based on each of the plurality of pieces of service information, a synchronization accuracy configuration corresponding to each piece of service information; and selecting, from synchronization accuracy configurations corresponding to the plurality of pieces of service information, a synchronization accuracy configuration with highest synchronization accuracy as the first synchronization accuracy configuration; or
selecting target service information from the plurality of pieces of service information; and using a synchronization accuracy configuration corresponding to the target service information as the first synchronization accuracy configuration.

20. The method according to claim 19, wherein in the plurality of pieces of service information, the target service information has a highest priority, or the target service information has a lowest delay requirement, or the target service information has a highest synchronization accuracy requirement.

21. The method according to any one of claims 16 to 20, wherein the first reference time information comprises location information of first reference time corresponding to the first synchronization accuracy configuration, or an index value of the first reference time.

22. The method according to any one of claims 16 to 21, wherein the method further comprises:
sending a second message to the second communication device, wherein the second message comprises a first indication, the first indication indicates the first synchronization accuracy configuration, and the second message is used to notify the second communication device that the first communication device performs time synchronization by using the first synchronization accuracy configuration.

23. The method according to claim 22, wherein the first synchronization accuracy configuration comprises at least one of the following: a first clock type and a first synchronization accuracy requirement; and
the first indication is an index value of the first synchronization accuracy configuration; or
the first indication comprises a time information type information element, wherein the time information type information element indicates the first clock type; or
the first indication comprises an uncertainty information element, wherein the uncertainty information element indicates the first synchronization accuracy requirement.

24. The method according to any one of claims 16 to 23, wherein the first communication device is a network device, and the second communication device is a terminal device; or the first communication device is a first terminal device, and the second communication device is a second terminal device.

25. A communication apparatus, comprising:
a communication unit, configured to receive and send data; and
a processing unit, configured to perform the method according to any one of claims 1 to 24.

26. A communication device, comprising:
a memory, configured to store program instructions;
a transceiver, configured to receive and send signals; and
a processor, configured to read the program instructions in the memory, to enable the communication device to perform the method according to any one of claims 1 to 24.

27. A computer-readable storage medium, wherein the computer-readable storage medium stores a computer program, and when the computer program is run on a computer, the computer is enabled to perform the method according to any one of claims 1 to 24.

28. A chip, wherein the chip comprises a processor, the processor is coupled to a memory, and the processor is configured to read a computer program stored in the memory, to enable the chip to perform the method according to any one of claims 1 to 24.
